# EUROPEAN PATENT SPECIFICATION

(11) **EP 3 149 670 B1**
(45) Date of publication and mention of the grant of the patent: **05.01.2022**
(21) Application number: 15732479.9
(22) Date of filing: 28.05.2015
(51) Int. Cl.: G06Q 10/08, G06Q 50/28, G06Q 50/32

(54) **DELIVERY AND MONITORING SYSTEM AND METHOD**
LIEFER- UND ÜBERWACHUNGSSYSTEM UND VERFAHREN
SYSTÈME ET PROCÉDÉ DE LIVRAISON ET DE SURVEILLANCE

(30) Priority: 28.05.2014 NL 2012917; 28.05.2014 NL 2012919; 28.05.2014 NL 2012918; 21.07.2014 NL 2013229
(43) Date of publication of application: 05.04.2017
(73) Proprietor: Zipp Labs B.V., 5656 AE Eindhoven (NL)
(72) Inventor: EKKEL, Frederik, 5656 AE Eindhoven (NL); LANGERAK, Alfred, NL-5656 AE Eindhoven (NL)
(74) Representative: V.O.
(86) International application number: PCT/NL2015/050385
(87) International publication number: WO 2015/183093

(56) References cited:
- US-A1- 2003 065 625
- US-A1- 2003 195 814
- US-A1- 2004 229 569
- Anonymous: "Wi-Fi positioning system - Wikipedia", , 7 May 2014 (2014-05-07), pages 1-2, XP055699282, Retrieved from the Internet: URL:https://en.wikipedia.org/w/index.php?t itle=Wi-Fi_positioning_system&oldid=607426 139 [retrieved on 2020-05-28]

## Description

The invention relates to a delivery system for items, such as consumer goods by delivery service, mail or the like. The invention further relates to monitoring methods and systems.

Presently a consumer ordering an item, for example via a web shop through the Internet, will provide an addressee and a delivery address for delivery of the item. The web shop will have the item packaged for transport and then a delivery service will have the item delivered to the address provided by the consumer, which may be his own address or different address. To this end a delivery vehicle, such as a truck, car, bike or pedestrian will bring the item to the delivery address for delivery. If the addressee is present at the delivery address he or she may accept the item, meaning that the delivery is or at least can be completed. However, if the addressee is not present or at least not in a situation to accept the item, the delivery vehicle will have to take the item back into the vehicle for either delivery at later moment in time or to be picked up by the addressee at a designated location, such as a post office or depot. This means that the delivery cannot be completed at the desired moment. Sometimes the delivery is completed by an unasked-for delivery at a nearby neighbor house, this without the consent of the addressee, and hence with a loss of trust in the delivery system.

In The Netherlands presently up to about 40% or more of deliveries too large to be inserted through a letter box or for which have to be signed by an addressee cannot be delivered at the designated time the driver arrives at the designated address and has to be taken back, for later delivery or delivery at a depot for retrieval by the addressee. This is costly and ineffective, results in increased traffic and therefore pollution and means that the addressee will receive the item at a later moment in time, which may be a day or more later.

It has been proposed to deliver items not at an addressees home address or office address, but at a designated place, such as a store or post office, for retrieval by the addressee. This means that the delivery can be made by the delivery service at any time during opening hours of said designated place and that the addressee can retrieve the item delivered at similar hours. However, this system may be useful for relatively small items, but not for larger deliveries.

It has also been proposed to provide a box at the address for delivery, which can be opened by the delivery person for depot of the delivery in said box and by the addressee for retrieval of said delivery therefrom. This however requires relatively much space at the addressees outside area, for positioning of such box, which box has to be well protected against theft and break in. Moreover such system is costly and necessitates both the addressee and the delivery person to have means for accessing said box, such as a code or key. This makes such system impractical because different delivery services may be required to use such system. Furthermore again such system is at best limited to relatively small deliveries and may prevent multiple deliveries.

US2003/0195814 discloses a system inter alia suitable for delivery of goods to a physical location, in which during delivery a person driving to the delivery location at some point prior to arriving at the location has to actively and physically operate his mobile device in order to send out the first digital message, and then check a second digital message received back from a computer system at the location.

US2003/0065625 discloses a system for delivery of goods, wherein a delivery vehicle is loaded with parcels and the driver is provided with a manifest showing the list of deliveries and his route. The vehicle is tracked during its route, wherein at a select time prior to delivery, the parcel recipient is contacted by a computer communication means, to determine of the recipient is home. Where he is home, the parcel will be delivered, but if he is not at home, the driver's manifest is updated to incorporate alternative delivery instructions, if such have are available. In this system the intended recipient of the parcel has to respond to the computer communication means to indicate whether he is at home, available for receipt of the parcel. Whereas the vehicle has to be tracked permanently by GPS. If no confirmation is received of presence at said home, an alternative delivery address may be provided based on a service agreement concluded with the recipient previously. This means that the intended recipient has to have such agreement established, prior to the delivery, with a fixed alternative delivery address, of which it is unknown whether a delivery can be made at that address, whereas an active involvement is necessary of the intended recipient. Moreover constant tracking of the vehicles is necessary, since th system cannot operate without such tracking information.

US2004/0229569 discloses an automatic door answering system provided at a door, which comprises a wireless communication interface arranged to directly communicate with a visitors wireless device. After pressing a door bell knob the interface requests a visitors identification information for confirmation and identification of the visitor, which requires back and forth communication between the interface and the wireless communication device of the visitor. For each visitor a unique identity code has to be stored in the system previously for the system to operate properly. The system is designed to then provide information to the visitor based on his identity. US2010/0171600 discloses a system for providing personalized messages to visitors.

Therefore there is a need for an alternative delivery system and method. There is a need for a delivery system and method with which deliveries can more often successfully be made, even when an addressee is not in a position to receive the delivery at an initially provided, intended delivery address. An aim of the present disclosure is to provide a system and method for delivery at least reducing at least one of the problems of the prior art. Alternatively or additionally the present disclosure aims at providing a system and method for delivery of items to addressees, which provides increased flexibility to the delivery service provider and to the addressees. An aim of the present disclosure is additionally or alternatively to provide a system and method for delivery which reduces the number of times a delivery cannot successfully be made.

At least one of these or other aims can be obtained at least in part with a system and/or method according to this disclosure.

A delivery system according to this description comprises a database comprising data relating to at least one delivery to be made and at least one intended delivery address for an addressee for said delivery, and at least one delivery vehicle. Such vehicle can be any suitable vehicle, such as for example but not limited to a car, van, truck, bike, motorbike, moped or a push cart or the like.

The delivery vehicle and/or a delivery person designated to said vehicle is provided with a first communication system. At least one addressee is provided with a second communication system. The delivery system further comprises a computer system for providing data from the database to the first communication system. Said data is formed by or includes data about the at least one delivery and said delivery address.

The delivery system further comprises a proximity detection system designed for detecting proximity of the delivery person and/or delivery vehicle to the delivery address. With such proximity detection system it can easily be established that a delivery person and/or delivery vehicle is close to the delivery address, such that the delivery system can become active for communication between the first and second communication systems and/or between the first communication system and the computer system and/or between the second communication system and the computer system.

The delivery system according to the invention is characterized by the features of claim 1.

The proximity detection system comprises at least one beacon at the delivery address, for communicating wireless with the first communication system when part of the first communication system is within a wireless communication range of said at least one beacon, designed for detecting proximity of the first communication system (7) to the delivery address. The beacon is designed for transmitting a recognition code unique to the individual beacon. The first communication device is provided with software for registering and comparing recognition codes received from beacons with recognition codes assigned to delivery addresses provided to the first communication system, wherein the proximity detection system is provided with a module presenting a visual and/or auditive signal on the first communication system when the proximity detection system detects proximity of the first communication system to the beacon. The visual and/or auditive signal comprises a link presented on the first communication system based on the comparison, such that the first communication system only presents such link for those delivery addresses and/or addressees for whom the comparison shows that the delivery person or delivery vehicle is carrying an item to be delivered. The link represents a virtual doorbell link presented on a screen of the first communication system for contacting a person registered in the first communication system and/or the computer system as associated with the address of which a match is found by said comparison, an alternative delivery address or a communication link for establishing communication between the first communication system and the addressee, especially the second communication system of the addressee.

According to the invention the second communication system is designed for communicating with the first communication system for providing an alternative delivery address for the delivery, especially during the delivery of said item and/or the computer system is designed for providing at least one alternative delivery address during delivery, said alternative delivery address provided from the database.

The second communication system is designed for communicating with the first communication system and/or with the delivery person and/or with a computer system associated therewith, for providing an alternative delivery address for the delivery, especially during the delivery of said item and/or the computer system is designed for providing at least one alternative delivery address during delivery, said alternative delivery address provided from the database.

In an advantageous embodiment the proximity detection system can comprise an algorithm for presenting a message to the delivery person via the first communication system and/or to the computer system when a proximity signal is provided by the proximity system. In a preferred embodiment the message can include presenting an image on a screen of the first communication system, allowing the delivery person to establish communication with the second communication system. Such image can for example comprise an image representing a link sending a message to the second communication system which will warning for said proximity via the second communication system, for example auditively and/or visually and/or tactually, such as known from warning signals available with a mobile phone. Such image can alternatively or additionally comprise an image representing a link for establishing a two way communication between the first and second communication systems, such that the delivery person and the addressee or another person designated to the second communication system can communicate with the delivery person, for example directly via speech or via email, texting, chat or the like communication means as for example available with smart phones.

According to the invention the proximity system comprises a beacon at the delivery address for wireless communication with the first communication system. Such beacon can be based on any radio frequency system, such as for example but not limited to Bluetooth^{®}, Wi-Fi, Z-Wave or Zigbee or the like. In a preferred embodiment the beacon and the first communication system are paired, for example through the computer system, such that the beacon can only communicate with devices of the first communication system paired therewith. This means that in such embodiment only communication devices of the first communication system "known" to the beacon can communicate with the beacon for the proximity system and/or only beacons "known" to the computer system can communicate with communication devices of the first communication system.

Additional to such beacon the proximity system can comprise one of a GPS type module provided in or for the first communication system for detecting the global position of the delivery vehicle and/or delivery person relative to the delivery address and a visual detection system designed for imaging the environment of a delivery vehicle and/or delivery person and comparing an image taken with an image representative for the delivery address.

When using a proximity detection system in addition to establishing a communication between the first and second communication systems a non-available signal can be sent directly to the first communication system, for example indicating to the delivery person that the addressee is not available, at least not at the intended delivery address, for receiving the delivery and/or providing an alternative delivery address and/or an alternative delivery time.

In a further aspect the computer system can be programmed to provide the at least one alternative delivery address to the first communication system when a non-available signal is provided from the second communication system. A non available signal can be provided for when for example the addressee has indicated in the second communication system that the delivery cannot be made to the intended delivery address or when for example an appropriate response to a door bell signal due to ringing of a door bell at the designated address is absent during a predetermined period of time. The delivery system may allow the second communication system to provide a redirect signal indicating at least one alternative address for delivery to the first communication system. Such redirect signal can for example comprise an alternative delivery address to be sent to the first communication system, i.e. especially to the delivery person or delivery vehicle or may be sent to the computer system of the delivery system, indicative for such alternative delivery address, which can then be sent to the first communication system, i.e. especially to the delivery person or delivery vehicle.

The delivery vehicle can comprise a tracking device, such as a GPS based system, for determining the position of the delivery vehicle relative to the intended address for delivery. An approach signal can then be provided to the addressee and/or the second communication system when the vehicle enters into a predetermined range relative to the intended delivery address. Such approach signal can be part of said proximity signal. This will for example allow the addressee to prepare for receipt of the delivery, for example by moving timely to the intended address, or may lead to providing the delivery truck and/or delivery person with at least one alternative delivery address, either directly or via said database, when for example the addressee is in no position to receive the delivery at said intended delivery address when the delivery might be expected at the intended address, for example based on the estimated time of arrival at the intended address given the distance between the intended address and the delivery truck and/or person. In such case a non-availability signal can be issued to the computer system and/or first communication system, as discussed before.

In an aspect a delivery system may comprise a second communication system which can comprise a stationary device, which can comprise a screen. The stationary device can for example be mounted near a door at the intended address of delivery, such that it, and especially a screen thereof is visible from outside the intended address, such that a delivery person can approach the stationary device. This may comprise a door bell. The stationary device can be designed such that an alternative address or several such addresses can be presented to the delivery person at the intended address. Thus when the delivery is not or cannot be accepted at the intended address the delivery person is provided with at least one alternative address for deliver. If several such addresses are presented the delivery person may choose or try several of these addresses.

Similarly the second communication system may comprise a hand held device, such as a smart phone or tablet, which a person can carry with him/her.

A door bell system suitable for use in such system may comprise at least a door bell, a door bell control system and an electronic screen. The door bell control system may comprise a memory, an input device and/or a communication unit. The memory may be designed for containing address information. The input device may be designed for receiving at least one address from outside the door bell system. In both cases an interface may be provided for presenting the at least one address on said screen retrieved from said memory and/or provided through said input device. The door bell may be coupled to the door bell control system for activating the interface for presentation of the information on said screen. Alternatively or additionally the door bell system may comprise a communication unit for communicating with a hand held device, such as a smart phone or a laptop, preferably suitable for two way communication. This allows a holder of the hand held device to communicate with a person at or near the door bell, for example for providing an alternative address, and/or for exchanging other information.

In embodiments the delivery system can comprise a hand held communication device and a stationary device comprising a signal unit providing a signal to the hand held device when a signal is provided from the stationary device, for example when a doorbell at an intended delivery address is rung, wherein the delivery system is designed such that:
- at least one alternative delivery address and/or alternative information can be sent from the hand held communication device to the stationary device, to be presented on a screen of the stationary device and/or to the first communication system; and/or
- at least one alternative delivery address is presented on the screen which is derived from the database or has been entered in the second communication device, especially in the stationary device.

In embodiments the delivery system can comprise a stationary device comprising a signal unit and a hand held unit for wireless communication with said stationary device, wherein the delivery system is designed such that at least one alternative delivery address and/or alternative information can be sent to the hand held communication device from the computer system and/or the second communication system, to be presented on a screen of the hand held device.

Thus an addressee can for example actively propose at least one alternative delivery address to a delivery person, or alternatively or additionally can provide the delivery person with other information, in real time and/or can activate the delivery system to present one or more alternative delivery address(es) on said screen and/or the first communication device, derived from the data base or for example from a memory in the stationary device.

In a further aspect a method for delivery according to the preamble of claim 6 can according to the invention be characterized by the features of the characterizing portion of claim 6.

A method according to this description can be a method for delivery of at least one item to at least one delivery address of an addressee of the item, wherein an intended delivery address for said item is entered into a first communication system available to a delivery person; and wherein at least one alternative delivery address for the item is provided to the delivery person, prior to or during delivery of said item. This allows the delivery person for example to avoid going to the intended delivery address and directly going to an alternative delivery address as provided to him/her.

During delivery of the item proximity of a delivery person and/or delivery vehicle associated to said delivery person to the intended delivery address can be detected using at least one beacon at the delivery address. When said proximity is within a predetermined range a proximity signal can be provided to the first communication means and/or to a second communication means held by the addressee or a person associated to the addressee, such that a communication can be established between the first and second communication means and/or between the first communication means and the computer system, for providing an alternative delivery address and/or an alternative delivery time.

The at least one alternative delivery address and/or delivery time may be provided:
- via a second communication system, provided to the addressee, to the delivery person and/or
- via a computer system, said alternative delivery address provided from a database connected to the computer system, to the first communication system and/or the second communication system.

The second communication device may comprise a screen or the like at the intended delivery address on which the alternative delivery address and/or time may be presented to the delivery person. Alternatively or additionally the said alternative delivery address and/or time may be sent to the first communication device, such as but not limited to a hand held device held by the delivery person. The alternative delivery address or addresses and/or time may be provided in real time or may be retrieved from for example a database of the delivery system or from a memory of the first and/or second communication system. Alternatively the alternative delivery address(es) and/or time may be retrieved from external database or databases, for example a social network database or agenda.

During delivery an approach signal can be communicated to the addressee, especially to the second communication system, when the delivery person enters a predetermined range relative to the primary delivery address, wherein the approach signal triggers the providing of the alternative delivery address or delivery time to the delivery person. This allows the delivery person to amend his/her route based on the alternative delivery address and/or time provided, at a relatively early stage, saving time and driven kilometers, since he/she does not have to go to the intended delivery address at the intended delivery time. Such approach signal can be a proximity signal as discussed before. Preferably the alternative route is calculated automatically and presented to the delivery person.

Additionally or alternatively at the delivery address the at least one alternative delivery address may be presented to the delivery person by a presentation device forming part of the first or second communication system, preferably on a screen, especially after signaling the delivery person's presence at or near the delivery address, for example by ringing a door bell, or a tracking signal of the vehicle or delivery person or the like or said proximity signal.

The at least one alternative delivery address or time can be presented to the delivery person after ringing a door bell connected to a door bell system, wherein:
- the addressee sets a forward signal in the door bell system prior to the delivery, which forward signal initiates the presentation of the at least one predetermined alternative delivery address; and/or
- upon ringing the doorbell the addressee receives a signal from the door bell system via the second communication system, where after the at least one alternative delivery address is presented to the delivery person, via said screen and/or via the first communication system.

In this description a door bell has to be understood as at least meaning a system with which a first person can indicate to a second person his or her presence at or near the premises of the second person. This may for example be a hardware doorbell provided at or near a door, gate or other entry blocking element to a premise, or a virtual door bell, for example designed for wireless communication with a handheld or other electronic device held by the second person or a virtual doorbell presented on a hand held device of the delivery person when arriving within a predetermined proximity of the delivery address, for example using a proximity system as discussed. If a proximity signal is received by a first communication system from a series of systems at the same time, they may be presented as a group or series of groups or individually to the delivery person, such that he or she can select an appropriate one. Alternatively they may be coupled to items to be delivered by the delivery person at that given time, such that only the proximity signal or signals or image associated thereto associated with a delivery to be made is or are presented to the delivery person to chose from.

In a system or method according to this disclosure one alternative delivery address and/or time can be provided to a delivery person when the delivery cannot be made at the intended delivery address and/or a the delivery time. Alternatively several such alternative delivery addresses and/or times could be provided simultaneously or subsequently. By providing a multiplicity of such alternative delivery addresses and/or times the delivery person is allowed to make a choice, for example based on his or her route for further deliveries to be made, experience of success at one or more of these alternative addresses, or for picking a second alternative address or time for delivery, should a first such alternative address also not be successful for delivery of the item. Such rescheduling and choice of an alternative address and/or time could also be made automatically based on an algorithm provided in the delivery system.

In general a delivery system as defined by claim 1 may provide an addressee or a person associated with the addressee of a delivery to be made to communicate with a delivery person, directly or indirectly, preferably during the delivering process of the delivery, in order to redirect the delivery person to a different delivery address and/or to a different delivery time.

The description further relates to a monitoring system and method, to a delivery system for items, such as consumer goods by delivery service, mail or the like and a method therefore and a doorbell system suitable for use therewith.

In an aspect a monitoring system can comprise a series of wireless beacons, at least one mobile monitoring device and a computer system. The computer system can for example be or comprise a stand alone computer, a computer network or a virtual computer such as a cloud based computer system, for example a cloud based server. Data gathered can for example be sent to or through the Internet. Each of the series of wireless beacons has a recognition code unique to the individual beacon wirelessly readable by said at least one mobile device when the mobile device is within a wireless communication range of the beacon. Each mobile device is provided with a registering unit for registering recognition codes of said beacons and with a communication unit for transferring the registered code to the computer system.

In an aspect a monitoring method can comprise a mobile device being moved along a series of wireless beacons having a recognition code unique to the individual beacon, wirelessly readable by said at least one mobile device when the mobile device is within a wireless communication range of the beacon, wherein the mobile device registers the recognition codes of the beacons along which it is moved and transfers the registered codes to a computer system.

In preferred embodiments an SSID of BSSID code is used as a recognition code of a beacon. A beacon can be a Wi-Fi router provided with such SSID of BSSID code.

In this disclosure an SSID or BSSID code should be understood at least as a hexadecimal number, such as a Service Set Identifier or the Ethernet MAC address according to IEEE 802.11, the norm for Wi-Fi, in compliance with e.g. RFC 1034 and RFC 3770. Other recognition codes can also be used, such as any type of signal disclosed in this application, for example but not limited to Bluetooth^{®}, Z-Wave or Zigbee or the like.

Since the recognition code is unique to a beacon such as a, preferably low energy, signal emitting device, which may only transmit a signal, or suitable for two way communication, which may for example be or be incorporated in a Wi-Fi router, in preferred embodiments the exact location of the mobile device at a given time can be established and thus a route can be tracked followed by the mobile device, including for example periods during which the mobile device is within the wireless communication range of a specific beacon. Since the recognition code can be picked up by the mobile device without the necessity of any action by a owner or user of such beacon such as the Wi-Fi router the position can be established easily. Moreover it can be picked up without having to enter the premises of for example a house or office at which the beacon, especially the Wi-Fi router is placed. Furthermore the code can be picked up without having to access a private network of the owner or user of the beacon, especially the Wi-Fi router, thus ensuring privacy. The recognition code can be registered by software, for example suitable to be run on a mobile device, at the back ground. This can for example be an app or software integrated in an operating system such device. The software can be designed to register the code, contact a data base on the computer system for comparing the recognition code with known recognition codes registered in the computer system. In the computer system further data can be coupled to the recognition codes, for example physical addresses at which a beacon with said recognition code is located. This allows mapping of the codes as registered.

In further elucidation of the present disclosure embodiments of a delivery system, door bell system and delivery method will be described, with reference to the drawings, which are only shown in elucidation and should not be understood as limiting the disclosure in any way. In the drawings:
Fig. 1 schematically shows a delivery system according to the description;
Fig. 1A schematically shows an embodiment of a device for use in a system according to the disclosure;
Fig. 2 schematically shows an alternative embodiment of a delivery system according to the description;
Fig. 3 schematically shows an alternative embodiment of a device for use in a system according to the description;
Fig. 4 schematically shows a further embodiment of a system using a beacon;
Fig. 5 schematically shows a hand held device showing a link to a communication system of a system according to the disclosure, which link by way of example is shown as a virtual door bell;
Fig. 6 schematically shows a hand held device showing an alternative delivery address for an item to be delivered; and
Fig. 7 schematically an alternative representation of information on a hand held device for a delivery person.

In this description different embodiments of systems and parts thereof, as well methods preformed therewith are disclosed and described by way of example only. In these embodiments the same or similar elements have the same or similar reference signs.

In this description an item or a delivery have to be understood as meaning one or more elements or items which by itself or together have to be delivered to a single intended address and addressee. "an item" to be delivered can therefore also be a plurality of items, unless specifically indicated differently, and may be similar to "a delivery" when the latter is used as a noun.

In this description a communication system may comprise or be formed by any suitable communication devices for communicating data such as address data between two electronic devices. A communication system can for example comprise a hand held device such as a mobile or smart phone, tablet or laptop computer, Wi-Fi or Bluetooth^{®} based system, radio transmitter or similar system for communication, preferably wireless communication. A communication within the meaning of this disclosure can also comprise stationary communication devices, which may communication via known or dedicated wire based or wireless protocols.

In this description a delivery vehicle can be any vehicle suitable for transporting and delivering items, such as but not limited to a car, van, truck, bike, motorbike, moped, drone or a push cart or the like. A delivery person should be understood as meaning at least one person involved with making a delivery of a delivery or item to a delivery address.

In this description an intended delivery address should be understood as an address initially provided to a delivery service or an organization requesting such delivery service to make the delivery, for example an address of delivery entered by an addressee or consumer upon ordering an item. An alternative address has to be understood as an address for delivery alternative to the intended delivery address or to another alternative delivery address.

In a system according to the present disclosure deliveries can be made to a delivery address, which may be an intended delivery address. If delivery at the intended delivery address is not possible, for example because the addressee is not in a position to receive it, an alternative delivery address can be provided to the delivery person, so as to allow him to deliver the delivery cq item nevertheless. In embodiments the at least one alternative delivery address can be provided real time by the addressee, for example to a communication system of the delivery person or delivery vehicle or presented on a screen at the intended delivery address. In embodiments at least one alternative delivery address can be provided prior to or during a delivery route executed by the delivery person and/or vehicle.

Alternative delivery addresses can for example be provided from a database of the delivery system or can be entered into a communication system provided to the addressee. To that end the delivery system, for example the communication system provided to the addressee, can comprise a door bell system having or connected to a screen, such that the at least one alternative delivery address can be presented on said screen to the delivery person. Said screen can for example be provided at or near the intended delivery address or can be part of a device provided to the delivery person, such as but not limited to a hand held device such as a mobile phone smart phone or tablet. The door bell system can comprise a hard ware door bell and/or a virtual door bell, for example presented on a hand held device such as a mobile phone, smart phone or tablet issued to the delivery person and/or in the delivery vehicle, for example via the described proximity system.

In this description proximity is to be understood as a delivery person and/or delivery vehicle being within a predetermined range from an intended delivery address. A proximity signal can at least be understood as a signal generated when said proximity is obtained, that is at least comprising a signal generated, indicating that a delivery vehicle and/or delivery person enters into said predetermined range from a delivery address. Such proximity signal can be generated by and/or received by a wireless beacon positioned at or near the delivery address, communicating with a device held by the delivery person or provided in the delivery vehicle. For example but not limited to a signal generated when a hand held device of the delivery person is brought within said proximity of a wireless beacon provided at or near the delivery address, which pair or have been paired with each other, such that it is recognized that the hand held device and therefor the delivery person is within said proximity. Additional to the beacon the position of the delivery person and/or vehicle can be established using GPS type systems, with which the proximity can be defined. A system according to the invention could further be using, in addition to the beacons, a visual recognition system, such as but not limited to Layar ^{®} or Google Glass^{®}, with which the position of a delivery person and/or delivery vehicle could be assessed. A proximity signal can also be a position signal or an approach signal.

In this description a beacon, especially a wireless beacon, is to be understood as at least encompassing a device or element which periodically or constantly emits a signal, especially a wireless signal forming or including a code, especially a unique code, identifying said beacon to an apparatus designed for recognizing said signal. To that end for example such apparatus can be provided with software, such as an app, and a receiver for said signal, such that such apparatus can define the identity of the beacon and, for example via a database, for example the identity of the address where the beacon is provided, personal information of an addressee associated with such address and/or beacon and/or information associated with an item to be delivered at said address and/or to said addressee. Although more sophisticated devices can be used for transmitting such signal, acting as or simulating a beacon, such as for example a WiFi router, which may even allow two way communication if desired, a beacon preferably is a relatively simple, preferably relatively low energy device which transmits the recognition signal(s). A beacon can be a one way device, transmitting only. Alternatively the beacon can also receive a recognition or authentication signal. A beacon may be a stand alone device, which is not connected to any computer network. Preferably a beacon can be adjusted, for example for setting a transmitting range thereof.

A proximity signal, position signal or approach signal can be used for early recognition of a delivery person and/or vehicle in the vicinity of an intended delivery address of or even for example recognizing such vehicle starting to move in the direction of an intended address for delivery of an item. Such recognition will for example enable an addressee to move to the intended delivery address or prepare for receiving said item at said address or have it received by a third person, or for example indicate that he will not be in a position to receive the item at the intended delivery address and/or at an intended time of delivery, in which case an alternative address for delivery and/or an alternative time for delivery can be provided to the delivery person and/or delivery vehicle, as described herein. Such may for example avoid the delivery person having to get out of the vehicle at the intended delivery address or even avoid the delivery person to go all the way to the intended delivery address. He can then for directly continue his delivery route, can rearrange the delivery addresses of his route and/or the time schedule, or can take other appropriate action. In an advantages embodiment the delivery route can be adjusted, preferably automatically, when a delivery address is changed during the execution of said delivery route, such that at all times the most efficient delivery route is defined for the delivery person cq delivery vehicle.

In a system according to the description the software is set such that only proximity signals, approach signals and/or position signals are generated or at least recognized of addressees and/or delivery addresses for which items to be delivered are carried by the delivery person or delivery vehicle.

In this description hand held device and mobile device are used for the same or similar devices, unless specifically defined differently.

In this description a beacon can comprise a unit providing a unique recognition code, especially an SSID or BSSID code. The beacon can be or be comprised in a Wi-Fi router. The beacon can also use an alternative or additional recognition code based on for example Blue Tooth, Z-Wave or Zigbee or the like.

In this description where reference is made to an addressee or delivery person, the male form may be used, which should however be understood as that it can also be the female form.

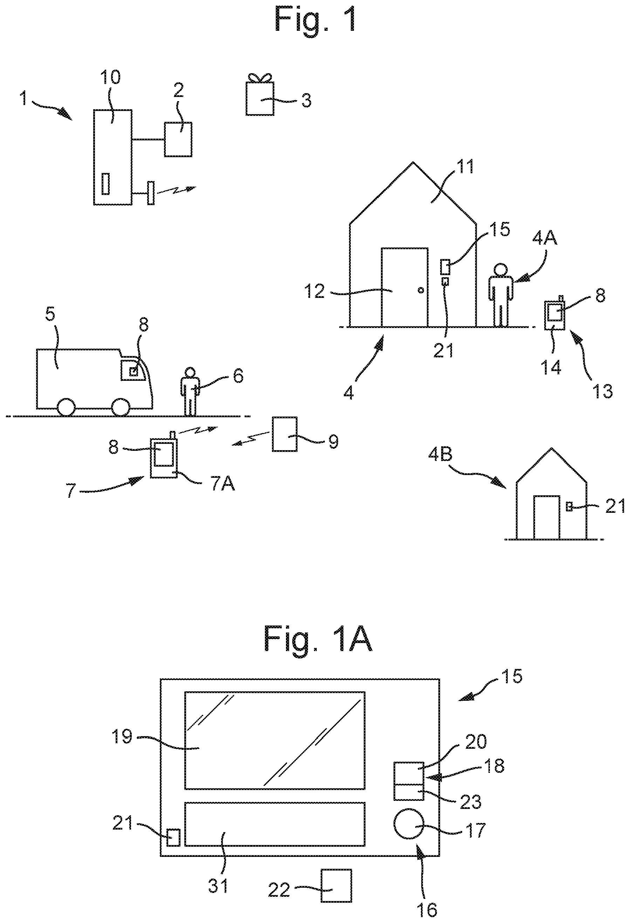

Fig. 1 shows schematically shows a delivery system 1, also suitable in a monitoring system or method as disclosed, comprising a computer 10 and a database 2 in which data is stored about items 3 to be delivered and intended delivery addresses 4 and addressees 4A to which the items are to be delivered. For each item 3 an intended delivery address and addressee 4A is stored in the database 2. At least one vehicle 5, here shown as a van, by way of example only, is provided for delivering the items 3. The vehicle 5 and/or a delivery person 6 assigned to said vehicle 5, for example a driver, is provided with a first communication system 7. This first communication system 7 preferably at least comprises a hand held device and/or a vehicle mounted device 7A in which at least one and preferably a series of items 3 to be delivered and related intended delivery addresses are stored, to be communicated to the delivery person 6, for example by showing these data on a screen 8 of the first communication system 7, for example on the hand held device 7A and/or in the vehicle 5. The communication system 7 can further be provided with or connected to a GPS system 9 for defining a delivery route, based on the delivery addresses as stored. Such delivery route may be generated by the system 7 or the computer 10 or by any other suitable means in a known manner known in the art, for example using a device as provided by TomTom or Google maps.

An intended delivery address 4 can be any private and/or commercial property, here shown as a house 11 with a front door 12. An addressee 4A is provided with a second communication system 13, which can provide a redirect signal, which may be or comprise an alternative delivery address 4B. The second communication system 13 can comprise a hand held device 14 and/or a stationary device 15. Such stationary device 15 can for example be mounted next to the door 12, at an outside of the house 11, such that it can be approached by a delivery person for use and/or inspection. The hand held device 14 can for example be a mobile telephone, a smart phone or a tablet.

A stationary device 15 can comprise a door bell system 16 comprising a door bell 17, a doorbell control system 18 and an electronic screen 19 for presenting information. The control system can comprise a memory 20 and an interface 23 for presenting information from the memory 20 onto the screen 19, visible to somebody approaching the door 12. Additionally or alternatively the doorbell system can comprise an input unit 31 for entering data into the doorbell system 16, for example via a key board or, using a communication unit 22, via a device held by the addressee 4A, such as a hand held device 14, for example a mobile phone, a smart phone or a tablet. This can be done via a wired system or, preferably, wireless, such as by Wi-Fi, Bluetooth^{®} or phone band, such as but not limited to GSM, or using an appropriate Internet protocol. In general a doorbell system 16 can comprise at least a beacon 21, preferably at least a beacon 21 and interface means such as e.g. at least one of interface 23, input unit 31, door bell 17, screen 19, communication unit 22, and the like.

A system 1 can for example be used as follows. A route for delivery is defined for the vehicle 5, based on the intended addresses for the items 3 to be delivered. Then the vehicle will move in the direction of the first address on the route, for delivery of the first item 3. At the intended address 4, i.e. the house 11 the delivery person will ring the doorbell 17. If the addressee 4A is in a position to accept the delivery he will open the door 12 and the item 3 can be delivered. However, if the addressee 4A is not in a position to accept the delivery, an alternative delivery address 4B can be provided to the delivery person 5.

In a first embodiment the alternative delivery address can have been provided by the addressee prior to the delivery, visible on the screen 19. The delivery person will read the alternative delivery address 4B and can add this alternative address to the route, for delivery of the item at the alternative delivery address.

In a second embodiment ringing the doorbell 17 can set off a timer in the doorbell system 16. When a predetermined period after ringing has been passed a non-available signal may be generated by the doorbell system 16. In an embodiment the non-available signal will set off the interface 23 for presenting an alternative delivery address 4B on the screen 19. In an embodiment the non-available signal may be communicated by the communication unit to the device 14 held by the addressee 4A. This can be done after said predetermined period or may be done directly upon ringing of the doorbell 17. The addressee 4A can then communicate with the communication device of the doorbell system 16, in order to set off the interface 23 for presenting an alternative delivery address 4B on the screen 19.

The alternative address 4B may then be retrieved from the memory 20 or may be entered directly into the input device by the addressee 4A, through the communication device.

In a further embodiment the non-available signal may be communicated to the computer 10. The computer 10 can then provide an alternative delivery address, for example retrieved from the database, and can communicate this to the doorbell system for presentation on the screen 19.

Alternative to or in addition the alternative delivery address 4B can be provided to the first communication system 7, for example for presentation on a screen on a hand held device 7A of the delivery person or into the GPS system. The alternative delivery address 4B can then be added to the route or can be used for recalculating the route in order to optimize the route, taking into consideration the alternative delivery address 4B. Also an auditive signal can be provided to the first communication system, such as the hand held device 7A, in order to inform the delivery person 6.

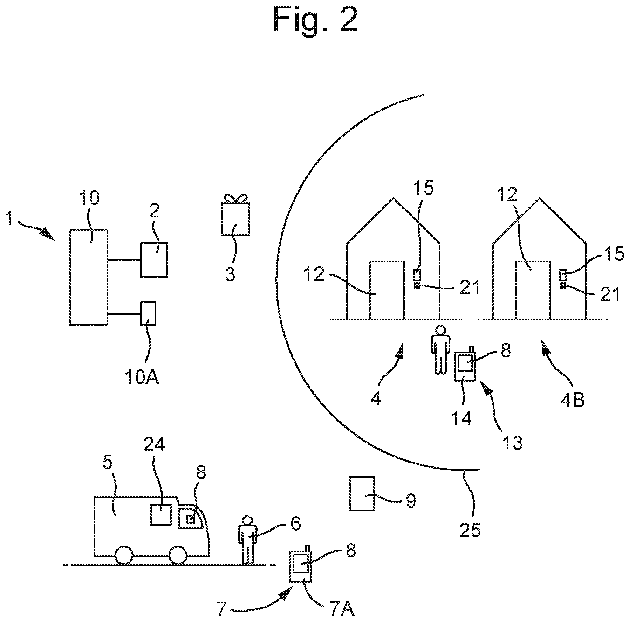

Fig. 2 shows a system similar to that of fig. 1. However, in this embodiment the vehicle 5 is provided additionally with a tracking system 24, for example coupled to the GPS system. The tracking system 24 can determine the position of the vehicle 5 and can provide an approach signal when the vehicle enters into a predetermined range relative to the intended delivery address. This range may be a range in distance or estimate time to arrival at the intended delivery address 4. In fig. 2 this range has been represented as a circle 25 around the intended delivery address 4.

The approach signal can be provided to the addressee 4A, for example by sending it to the second communication system 13, especially to the device 13 held by the addressee and/or to the stationary device 15.

When sent to the addressee 4A, the addressee can send a non-available signal to the stationary device 15, for presenting an alternative delivery address on the screen, in any way as discussed here before with respect to fig. 1, or can make himself available for receipt of the delivery at the intended address. Sending a non-available signal can be automatic or can be done actively by the addressee 4A. When sent to the stationary device 15, the stationary device may be set to respond to the first communication device indicating whether the addressee will be available for receipt of the delivery cq item 3 or not. In the latter case an alternative delivery address will be provided to the first communication system, especially to the delivery person, and/or to the GPS and/or tracking device for recalculating the delivery route at an early stage, i.e. well prior to the vehicle arriving at the intended delivery address. Obviously the route can also be (re)calculated by the computer.

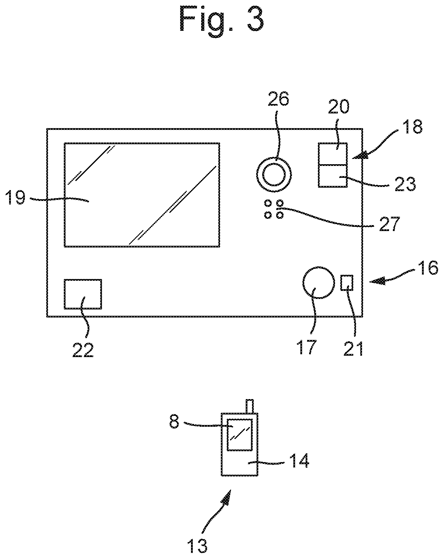

Fig. 3 shows a doorbell system 16 system, comprising the doorbell 17 and optionally a screen 19. Also a camera 26 is provided, and a communication unit 22, suitable for communication at least with a hand held device 14, such as a mobile phone, smart phone or tablet. This doorbell system 16 may be similar to that as described before, and allows the user of the hand held device to get images from the camera 26 presented to him on his hand held device. Preferably a microphone 27 is also provided, allowing two-way communication with a person ringing the doorbell 17. If that person is for example a delivery person, again an alternative delivery address 4B may be provided to him, for example eon the screen 19 or on the first communication system, as described. Additionally or alternatively other information may be provided to said person, audibly and/or visually and based on for example the image shown to him and/or further information provided the holder of the hand held device 14 can decide to take further action, such as remotely opening a door, gate or such closure, connecting the person at the door to another person such as for example a neighbor or informing official bodies such as the police, should such appear necessary.

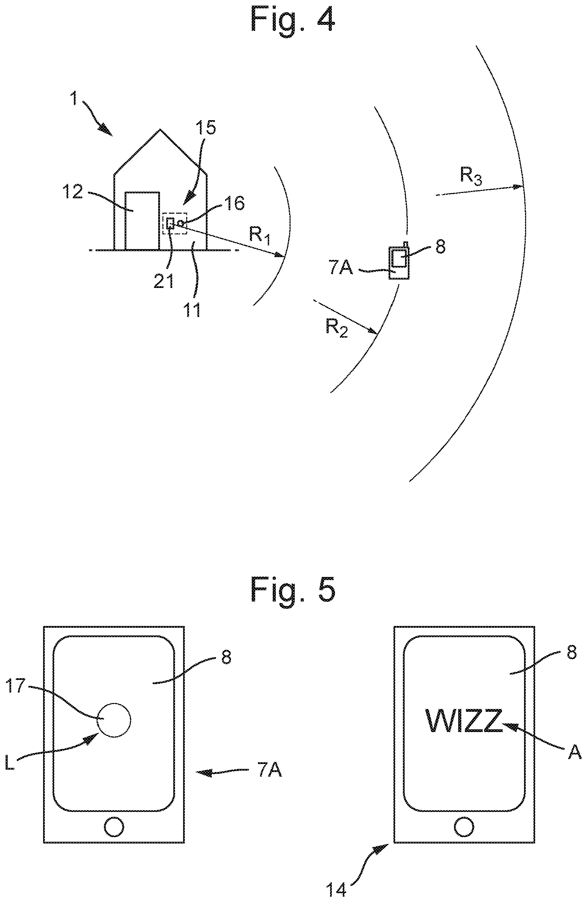

Fig. 4 shows a further embodiment of a system, wherein schematically an intended address 4 is represented by a house 11 with a door 12, close to which a beacon 21 is provided. This beacon 21 may be incorporated in a stationary device 15 or doorbell system 16 as described before, or can be provided by itself. The beacon 21 is preferably a device which can communicate wireless with the first communication system 7 when within a communication range of said beacon 21. For example the beacon 21 can be a known wireless Wi-Fi beacon or Bluetooth^{®} beacon or another, preferably short range wireless beacon, communicating with a hand held device 7A of the delivery person 6 and/or a similar device in the delivery vehicle 5. Such beacons and communication protocols are well known in the art. Preferably the beacon 21 is positioned within the premises, such that it cannot reached from the outside and/or tampered with by unauthorized people.

The beacon 21 periodically, intermittently or constantly emits a signal, preferably a coded signal indicative for the beacon 21, such as a coded Wi-Fi or Bluetooth^{®} signal. The code is unique to said beacon 21. The beacon 21 and the relevant code is known to the system 1, for example stored in the computer 10 or database 2. The first communication system 7, such as the hand held device 7A, can then be provided with software such as an app which recognizes the beacon 21 by its signal and/or the code. The signal can be understood as a proximity signal. Preferably the beacon 21 can be set for different ranges, for example but not limited to a first range up to a few meters, a second range up to 10 to 15 meters and a third range up to about 75 to 100 meters. Thus for example an addressee 4A can set his beacon 21 for one of these ranges, depending on how soon he wants a proximity signal to be provided. In fig. 4 schematically the ranges are indicated by R1, R2 and R3 respectively.

Once the beacon 21 is recognized by the first communication system 7 by said proximity signal, different events can occur.

The proximity signal will set the software in the first communication system to show a link L on the screen 8 of the hand held device 7A and/or in the vehicle 5, which can for example represent a virtual door bell 17. By activating said link L the delivery person 6 can inform the addressee 4 of his proximity, for example through a physical bell at the intended address 4 and/or through a attention signal A, for example received on his computer of on a hand held device 14 of the second communication system 13, for example by sound, vibration and/or image, in fig. 5 represented by "WIZZ". The link L on the screen 8 will only be shown when the relevant device 7A of the first communication system 7 can recognize the relevant beacon 21, for example by having been paired with it through the computer 10 and database 2, this event can only occur through the first communication system 7 and thus the addressee 4A will know that the signal A received comes from a known party. The software such as an app of the first communication system may be set such that the identity of the device 7A communicating with the beacon 21 also becomes known to the addressee 4A.

When the addressee receives said attention signal A, for example on his hand held device 7A, a communication link may be established between the first and second communication systems 7, 13, for example between the hand held devices 7A and 14 or between the hand held device 14 and the device 15 or door bell system 16. This can allow the addressee 4A to communicate with the delivery person 6, for example in order to provide him with instructions. These instructions may include an alternative delivery address 4B and/or an alternative delivery time, or a refusal of the item 3 or the like. Alternatively the addressee can initiate that an alternative delivery address and/or time is provided to the delivery person directly, for example as such link. Said alternative delivery address 4B can for example be retrieved from the database 2 or the memory 23 of the fixed device 15 or door bell system 16. This can for example be initiated by issuing a non-availability signal to the first communication system 7 and/or the computer 10. The non availability signal can be generated by the system when the addressee has indicated such in or to the system 1. For example by means of an input device 22 or via his hand held device 14. In such embodiment when the first communication system 7 communicates with the beacon 21, issuing the proximity signal, the non availability signal is generated or received by the first communication system.

In an embodiment this hand held device 14 can be provided with software, for example an app with which the system can automatically detect when the hand held device 14 is outside a predetermined range of the intended delivery address 4A, which will then set the system 1 to generate said non availability signal. Such detection can for example be done through the beacon 21 or via GPS tracking of the hand held device 14 or other suitable means.

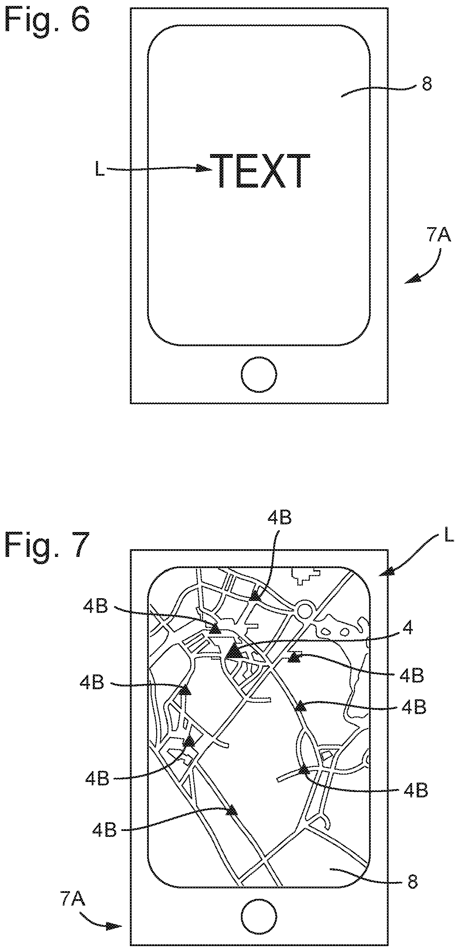

An alternative delivery address 4B can be provided directly on the screen 8 for the delivery person 6 and/or delivery vehicle 5, for example as shown in fig. 6 on the screen 8 of hand held device 7A, in fig. 6 represented by "TEXT". This can be provided automatically on the screen 8, that is without involvement of the addressee, for example after receipt of the non-availability signal.

In embodiments a series of links L and/or alternative delivery addresses 4B can be shown, for example as pictograms on a map, as schematically shown in fig. 7. In fig. 7 a map is shown on the screen 8, showing the intended delivery address 4 as well as a series of alternative delivery addresses 4B, associated with the intended delivery address 4 and/or the addressee 4A. In fig. 7 alternative delivery addresses 4B are shown within a certain range from the intended delivery address 4, for example a few hundred meters. In embodiments only alternative delivery addresses can be shown available for receiving the item 3. Alternatively all alternative delivery addresses 4B, associated with the intended delivery address 4 and/or the addressee 4A within said range can be shown, of which for example by color differences or otherwise differentiating between such addresses available for receipt of items 3 and such addresses not available for such receipt. For example green for available and red for not available. This will allow the delivery person 6 to choose the most suitable alternative address. Preferably the relevant pictogram will be a hyperlink to the actual address information which may show up by initiating the (hyper)link or by a "mouse over" showing the information directly on the screen 8. Preferably the delivery person can chose one of the alternative addresses 4B and add it to the delivery route. In embodiments the system 1 may show to the delivery person for some or all of the alternative delivery addresses 4B the consequences of choosing that address 4B, for example for the remaining delivery route, the ETA for the items 3 to be delivered and the like information, in order to even better assess the most appropriate delivery route. In embodiments the delivery person 6 may be able to change the range within which alternative delivery addresses may be found, for example by zooming in or out on the screen 8. Obviously in the other embodiments also the or each alternative address or link can be represented differently, for example on a map, by graphic images or as a list and/or as delivery alternative routes including different alternative delivery addresses In all embodiments the screen 8 is preferably a touch screen.

In embodiments a non availability signal can be sent directly by the second communication system 13 or by the computer 10, for example through the hand held device 14, to the first communication system 7, once the addressee 4 has indicated to the system 1 that he is or will not be available for receipt of an item 3 at the intended delivery address 4, at an estimated or indicated delivery time, to be processed by the computer 10 or to be shown on the hand held device 7A. Such non availability signal can for example be generated based on an agenda of the addressee 4A. A non availability signal can then for example be defined by periods in such agenda from which it follows that the addressee will not be available for such receipt of an item. Additionally or alternatively an addressee may be provided with the opportunity to indicate such periods of non availability directly in the system 1, for example through a web site associated therewith.

In embodiments the non availability signal indicating one or more periods in which the addressee will not be available for receipt of an item 3, can be set in the system 1, for example actively by the addressee or through an agenda of the addressee communicating with the system 1. This will allow the system for example to calculate a delivery route in which the relevant address can be approached at a period in which the addressee will be available for receipt, or by adding an alternative address 4B to the delivery route instead of the intended delivery address 4.

An approach signal or proximity signal as described can inform an addressee about an estimated time of arrival (ETA), which for the proximity signal may be relatively short, for example seconds or minutes, and for the approach signal may be longer, for example minutes to tens of minutes or even longer. Alternatively or additionally the ETA can be communicated to the system 1, especially to the computer 10 and/or the first communication system 7, such that for example the position of the delivery person 6 and/or vehicle 5 can be assessed, that ETA's for one or more of the further addresses where deliveries have to be made in the relevant delivery route can be calculated and the route can be amended based on such ETA's and/or it can be assessed whether the addressee will be available at the intended delivery address at the ETA and, if not, an alternative delivery address or delivery time can be provided.

During his delivery route a delivery person 6 and/or delivery truck may pass a series of beacons 21, some of which are not associated with items 3 to be delivered during the delivery route. Proximity and/or approach signals from and/or to such beacons 21 may nevertheless be used by the system 1. For example by tracking the time when the said signal is exchanged with such beacons 21 the position and/or progress of the vehicle and/or delivery person 6 can be calculated, allowing a periodical or constant calculation of ETA's for addresses along the delivery route. The data about the progress of the vehicle 5 and/or delivery person 6 during several delivery routes can be stored in the system 1, for example in the database 2, to be used during future delivery routes, in order to more accurately define ETA's. The system 1 can thus be self learning. Also the data from the progress and/or position of the vehicle can be combined with further information available about for example traffic and/or traffic jams along the calculated route, road works, detours and the like for further optimizing the delivery route.

In the description given here before, the proximity signal is provided by the beacon 21 being positioned at a delivery address 4, actively issuing a signal, to be detected by the first communication system, especially the hand held device 7A. Obviously such beacon 21 can also be a passive element, such as a transponder, which provides a signal only when the hand held device 7A is brought into a predetermined proximity of the transponder.

Preferably there need not be a two way communication between the beacon 21 and the first communication device 7A. Moreover preferably at the premise 4 and/or in the beacon 21 there is no registration of identity, recognition codes or the like necessary of first communication devices. Registration can occur in the computer system 10.

When the first communication system, especially the hand held device 7A of the delivery person 6 and/or the delivery vehicle 5 is in proximity of a number of possibly relevant beacons 21, a link 21A for some or all of these beacons 21 may come up, which means that the delivery person 6 will have to choose the right one. According to the invention software of the system 1 is designed such that the first communication system 7 will only provide a link for those delivery addresses and/or addressees for whom the delivery person 6 or delivery vehicle 5 is carrying an item 3 to be delivered. Such link may again be provided on the screen 8 of the hand held device 7A. This will significantly limit the number of links shown, even in a crowed area such as for example an apartment building. Again such links can be represented by a virtual door bell or an alternative delivery address or a communication link for establishing communication with the addressee.

In this description an addressee can define a network of alternative delivery addresses from which an alternative delivery address can be chosen by the system and/or the delivery person, depending on for example the further deliveries to be made, availability of people at these alternative delivery addresses and the like. Preferably an addressee can define a preferred order of the alternative delivery addresses. Preferably the availability of people at such alternative delivery addresses 4B will be known or can be made known to the system 1, similar as that of the intended addressee 4.

Additional to a beacon 21 the position of the delivery person 6 and/or vehicle 5 can be established using GPS type systems, with which the proximity can be further defined, as described before. A further example could be using a visual recognition system, such as but not limited to Layar ^{®} or Google Glass^{®}, with which the position of a delivery person 6 and/or delivery vehicle 5 could be further assessed, for generating the proximity signal. For example a delivery person can periodically or constantly take in images of the environment, which will be recognized through appropriate image recognition software of the system, such that the position of the delivery person cq vehicle can be assessed. In an embodiment the software can extract an image of the intended delivery address or of one or more positions along the delivery route with a known position relative to the intended delivery address, for example from Google^{®} Map's street view or Layar^{®}. The software of the system 1 can then compare the images taken along the route by the delivery person and/or vehicle with these images of the intended delivery address and/or positions along the delivery route and when a match is found define the position of the delivery person and/or vehicle relative to the intended delivery address.

In alternative embodiments an item can be provided with a delivery code, such as a bar code or a QR code or the like, which can be scanned by the delivery person, for example with the hand held device 7, for example when a door bell 16 is not answered at the intended delivery address. The scanned code can then provide the delivery person with an alternative delivery address or a link as discussed before, presented on the screen 8 of the hand held device 7 or vehicle 5. The code can be generated by the system 1 based on information presented by a person ordering an item 3, for example through a website, such that the information is scrambled in said code and the information as such will not become available to the delivery person 6, but the link will allow him to establish a connection with the addressee, for example through a mobile phone number, for communication or information or provide an alternative delivery address. In such embodiment the information may be scrambled into said code directly after entering the information into the website, such that only said code is stored in the database, wherein the software of the first communication system can translate said code into the desired link.

As discussed a system 1 according to the disclosure can define a delivery route for a series of items to be delivered, based on e.g. at least one of:
- location of the intended delivery addresses;
- indicated availability or non-availability of the addressees;
- traffic information;
- data stored in the system about earlier delivery routes, alternative delivery addresses provided and other information.

During execution of the delivery route the delivery route can be changed, such as optimized, and/or an alternative delivery route for the remaining items 3 to be delivered can be provided by the system 1, by recalculation, based on further information fed into the system and/or generated by the system 1, preferably real time, for example about at least one of:
- a non-availability signal entered into the system:
- by the addressee 4A through the second communication system 13; or
- generated by the system 1 due to for example a change in an agenda of an addressee 4A, said agenda communicating with the system 1, such as for example but not limited to an Outlook^{®} agenda; or
- due to a change in a calculated ETA, for example due to an unexpected delay along the delivery route for the delivery person 6 and/or vehicle 5, due to for example but not limited to a traffic accident, road works, or a delay during the delivery of an item;
- an alternative delivery address 4B entered into the system by the addressee 4A directly, for example for personal reasons; and/or
- traffic information entered into the system 1, for example but not limited to information about blocked roads, traffic jams and the like.

Preferably the delivery person can chose to progress with the originally calculated delivery route or follow the further alternative delivery route for the remaining items as proposed by the system. During the execution of the delivery route preferably the addressees of the items 3 to be delivered and/or, if alternative addresses are provided for some or all of the items, a contact person at the alternative address or addresses are preferably informed about the progress of the execution of the delivery route and/or of any changes in said delivery route. This can for example be done through a website or app which shows to an addressee of an item 3 the location of a vehicle 5 and/or delivery person 6 carrying said item 3 on a map, preferably real time. To this end the addressee 4A and/or the said contact person or persons of the alternative address(es) 4B can be provided with a login code identifying him as associated with a specific item or number of items 3. This will allow tracking of the item 3, preferably real time. This website or app can be part of the second communication system, such that it will allow the addressee and/or said contact person to communicate with the first communication system 7 and/or other elements of the system 1, for example a communication device 7A of a or another contact person through said web site or said app.

In a system 1 according to this disclosure in embodiments also the possibility can be offered to enter a pick up request, requesting a delivery person 6 and/or vehicle 5 to pick up one or more items 3 at an address 4, to be referred to as a pick up address, for example an item 3 previously delivered at such address 4, to be returned to a sender and/or to be delivered to a different address. If such pick up request is entered into the system 1 it can be incorporated into a delivery route. When such pick up request is entered into the system 1 it can be processed, for example by incorporating it into a delivery route which is to be executed later, or by incorporating it into a delivery route during execution of such delivery route, which will lead to calculating an alternative deliver route or at least for a remaining part of said delivery route.

In embodiments a series of alternative delivery addresses can be provided to the delivery person and/or the delivery truck, such that the delivery person can chose one of these addresses, for example an address fitting his route best, or can try one or several of these addresses for making the delivery.

If a delivery of an item is made to an alternative delivery address, it is preferred that signal is sent to the addressee informing him of the delivery and the address at which it has been delivered. In embodiments alternative delivery addresses may be retrieved from a social network of which the addressee is a member.

In a monitoring system or method according to this disclosure locations and/or movements of for example delivery persons, maintenance persons, service crew, health caregiver and other persons can be monitored registered and used for example for assessment of productivity, job performance, scheduling of activities and the like. Also data gathered by such monitoring system or method can be used for other purposes, such as planning, advertising, marketing and the like.

For example, in delivery systems and methods as discussed the recognition codes registered can be used to real time or afterwards monitor the location and/or movement of a delivery person. Data gathered can then be used for future use, for example for planning routes to be followed by the delivery person, planning time necessary at different addresses, proceedings of a route followed by the delivery person and similar analyses which will be clear to the skilled person.

In another example data can be gathered of persons delivery papers, magazines, folders and the like during their distribution routes. For example progress of the person along the intended route can be monitored, which may provide an indication of the accuracy of delivering the papers, magazines, folders and the like. Moreover such information can be used in proof of delivery.

A monitoring system (1) can comprise a series of wireless beacons (21), at least one mobile monitoring device (7) and a computer system (10). The computer system can be any computer system, such as for example but not limited to a computer system comprising or formed by a stand alone computer or a computer network, a virtual computer or a virtual computer network, such as but not limited to a cloud based system. Each of the series of wireless beacons (21) has a recognition code unique to the individual beacon (21), wirelessly readable by said at least one mobile device (7) when the mobile device (7) is within a wireless communication range of the beacon (21). Each mobile device (7) can be provided with a registering unit for registering recognition codes of said beacons (21) and with a communication unit for transferring the registered code to the computer system (10). The series of beacons (21) can comprise at least a series of WiFi routers. At least a series of said beacons (21) can have an SSID or BSSID number as recognition code. The beacons (21) can also use an alternative or additional recognition code based on for example Blue Tooth, Z-Wave or Zigbee or the like.

In embodiments an entity, such as a person or company, having a beacon (21), such as a beacon (21) with a unique recognition code, can register said beacon (21), especially but not limited to the unique recognition code, for example with the computer system, for example through appropriate software, such as but not limited to an app. These registered codes can then be provided to the mobile devices (7), such that the mobile device (7) will only register codes which are recognized as recognition codes registered beforehand. In alternative embodiments any code picked up by a mobile device (7) complying with a predetermined configuration, such as an SSID or BSSID code, could be registered by the mobile device (7) when within a wireless communication range thereof. Such embodiments would provide for even more data about the location and/or movements of the mobile device (7). Preferably then filtering of the data can be performed, for example by filtering out any such codes which have not previously been registered with the computer system (10) as for example a member of an interest group, such as a community. A community can for example comprise a number of persons connected to each other, for example by social or commercial ties, of which the recognition codes may be grouped in such community. A person can be a member of different such communities of groups. This can have the advantage that only a limited number of codes will have to be considered at a given address, for example for showing a virtual doorbell or link, as discussed further here after.

Preferably the system comprises mapping software with which the codes can mapped, for example along a route or defining a route followed by the mobile device. The mapping software is preferably suitable for mapping a route followed by the at least one mobile device (7) based on the recognition codes registered by the mobile device (7), wherein the mapping software is more preferably designed to provide information on how long the mobile device (7) is or has been within the wireless communication range of each beacon (21) it registers or has registered. To that end the mobile device (7) preferably has a timing unit for time stamping a recognition code registered by the mobile device(7) and more preferably also the time frame during which the mobile device (7) is within the wireless communication range of the relevant beacon.

The mobile device (7) can comprise a memory for temporarily storing recognition codes. Then the mobile device (7) can later on be coupled to the computer system (10) for loading the codes into the computer system (10). Preferably the series of beacons (21) comprise at least a series of Wi-Fi routers and/or wherein at least a series of said beacons have a SSID or BSSID number as recognition code.

In embodiments in the or each mobile device (7) data has been stored of a route to be followed, including data of a series of addresses (4) to be approached, wherein to each address a unique recognition code has been assigned. The mobile device (7) comprises software for registering recognition codes of beacons (21) and comparing these with recognition codes assigned to the addresses (4) of the route stored in the mobile device (7). The mobile device (7) comprises a signal unit for providing a signal when a match is found between a registered recognition code and a recognition code assigned to one of the addresses (4) of the route stored in the mobile device (7). Such signal can for example be a virtual doorbell or a communication link as will be explained hereafter with respect to exemplary but non limiting delivery systems and methods.

The recognition code can be registered by software, for example suitable to be run on a mobile device (7, 14), at the back ground. This can for example be an app or software integrated in an operating system of such device. The software can be designed to register the code, contact a data base on the computer system (10) for comparing the recognition code with known recognition codes registered in the computer system (10). In the computer system (10) further data can be coupled to the recognition codes, for example physical addresses (4) at which a beacon with said recognition code is located. This allows mapping of the codes as registered. Additionally and/or alternatively other data connected to said recognition code can be stored in said computer system (10), such as advertisements, adds, info etc. For example a user of the system can register that his house (11) is for sale, which information will then be made available to holders of a mobile device (7) running the appropriate software for registering said recognition code and providing a link to said further data and/or presenting said further data directly on the mobile device. Preferably a holder (6) of the said mobile device (7) can set appropriate filters for receiving or preventing receipt of such further data, based on for example interests registered in the computer system.

During deliveries made the hand held or mobile device (7) of the first communication system can store recognition codes registered at or near delivery addresses (4) or even further along the route, such as the SSID or BSSID codes of beacons (21) such as but not limited to Wi-Fi routers at or near said addresses or along the route. This will allow real time and/or later tracking of the delivery person and provide valuable data for analyzing performances, accuracy, planning and the like, as described before. The beacons (21) can also use an alternative or additional recognition code based on for example Blue Tooth, Z-Wave or Zigbee or the like. Preferably the system allows the use of such recognition codes based on different systems.

A monitoring system (1) can comprise a series of wireless beacons (21), at least one mobile monitoring device and a computer system, such as an Internet cloud server, wherein each of the series of wireless beacons (21) has a recognition code unique to the individual beacon (21) wirelessly readable by said at least one mobile device (7) when the mobile device (7) is within a wireless communication range of the beacon (21), wherein each mobile device (7) is provided with a registering unit for registering recognition codes of said beacons (21) and with a communication unit for transferring the registered code to the computer system (10). The communication unit can be designed for real time transfer of said recognition codes to the computer system (10), preferably wireless. The mobile device (7) can comprise a memory for temporarily storing recognition codes. The mobile device (7) can comprise a timing unit for registering the time a recognition code is registered by the mobile device (7).

The series of beacons (21) can comprise at least a series of WiFi routers and/or wherein at least a series of said beacons have a SSID or BSSID number as recognition code.

The computer system (10) can comprise mapping software for mapping a route followed by the at least one mobile device (7) based on the recognition codes registered by the mobile device (7), wherein the mapping software is preferably designed to provide information on how long the mobile device is or has been within the wireless communication range of each beacon it registers or has registered.

In the or each mobile device (7) data can be or have been stored of a route to be followed, including data of a series of addresses to be approached, wherein to each address (4) a unique recognition code has been assigned. The mobile device comprises software for registering recognition codes of beacons (21) and comparing these with recognition codes assigned to the addresses of the route stored in the mobile device. The mobile device (7) then comprises a signal unit for providing a signal when a match is found between a registered recognition code and a recognition code assigned to one of the addresses of the route stored in the mobile device. Thus for example addresses can be selected along the route known to the system, for example for later reference.

In a monitoring method according to the disclosure a mobile device can be moved along a series of wireless beacons having a recognition code unique to the individual beacon, wirelessly readable by said at least one mobile device when the mobile device is within a wireless communication range of the beacon. The mobile device registers the recognition codes of the beacons along which it is moved and transfers the registered codes to a computer system. The mobile device can transfer said recognition codes to the computer system real time, preferably wireless. Alternatively or additionally the mobile device can temporarily store the registered recognition codes. Preferably the mobile device time stamps a recognition code when registered by the mobile device.

The series of beacons can send out a SSID or BSSID number as recognition code.

The computer system can comprise mapping software with which a route is mapped as followed by the at least one mobile device based on the recognition codes registered by the mobile device, wherein the mapping software is preferably provides information on how long the mobile device is or has been within the wireless communication range of each beacon it registers or has registered.

In a monitoring method the or each mobile device data can be stored of a route to be followed, including data of a series of addresses to be approached, wherein to each address a unique recognition code is or has been assigned, wherein the mobile device comprises software with which recognition codes of beacons are registered and are compared with recognition codes assigned to the addresses of the route stored in the mobile device, wherein the mobile device provides a signal when a match is found between a registered recognition code and a recognition code assigned to one of the addresses of the route stored in the mobile device. The signal preferably comprises at least one of:
- a virtual doorbell link presented on a screen of the mobile device for contacting a person registered in the mobile device and/or the computer system as associated with the address of which a match was found;
- an alternative address to be included in the route as alternative for the address of which a match was found;
- a signal that the mobile device is at an intended address at the route.

A delivery system as described can comprise or be used as or with a monitoring system according to this description and/or vice versa.

The invention is by no means limited to the embodiments as shown and/or described in this description. Many variations thereof are possible within the scope of the claims.

## Claims

1. Delivery system (1), comprising a database (2) comprising data relating to at least one delivery to be made and at least one intended delivery address (4) for an addressee (4A) for said delivery, and at least one delivery vehicle (5),
wherein the delivery vehicle (5) and/or a delivery person (6) designated to said vehicle (5) is provided with a first communication system (7) and the at least one addressee (4A) is provided with a second communication system (13), the delivery system (1) further comprising a computer system (10) for providing data from the database (2) to the first communication system (7) formed by or including data about the at least one delivery and said delivery address (4), wherein the delivery system (1) further comprises a proximity detection system, **characterized in that** said proximity detection system comprises at least one beacon (21) at the delivery address (4), for communicating wireless with the first communication system (7) when part of the first communication system is within a wireless communication range of said at least one beacon (21), designed for detecting proximity of the first communication system (7) to the delivery address (4);
wherein the beacon (21) is designed for transmitting a recognition code unique to the individual beacon (21);
wherein the first communication device is provided with software for registering and comparing recognition codes received from beacons (21) with recognition codes assigned to delivery addresses provided to the first communication system (7),
wherein the proximity detection system is provided with a module presenting a visual and/or auditive signal on the first communication system (7) when the proximity detection system detects proximity of the first communication system (7) to the beacon (21),
wherein the visual and/or auditive signal comprises a link (21A) presented on the first communication system (7) based on the comparison, such that the first communication system (7) only presents such link (21A) for those delivery addresses and/or addressees for whom the comparison shows that the delivery person (6) or delivery vehicle (5) is carrying an item (3) to be delivered, wherein the link (21A) represents a virtual doorbell link presented on a screen of the first communication system (7) for contacting a person registered in the first communication system (7) and/or the computer system (10) as associated with the address of which a match is found by said comparison, an alternative delivery address or a communication link for establishing communication between the first communication system (2) and the addressee (4A), especially the second communication system (13) of the addressee (4A),
wherein:
- the second communication system (13) is designed for communicating with the first communication system (7) for providing an alternative delivery address (4B) for the delivery, especially during the delivery of said item (3) and/or
- the computer system (10) is designed for providing at least one alternative delivery address (4B) during delivery, said alternative delivery address (4B) provided from the database (2).

2. Delivery system (1) according to claim 1, wherein the proximity detection system further comprises at least one of:
- a GPS type module provided in or for the first communication system (7) for detecting the global position of the delivery vehicle (5) and/or delivery person (6) relative to the delivery address (4); and
- a visual detection system designed for imaging the environment of a delivery vehicle (5) and/or delivery person (6) and comparing an image taken with an image representative for the delivery address (4).

3. Delivery system (1) according to any one of the previous claims, wherein the computer system (10) is programmed to provide the at least one alternative delivery address (4B) to the first communication system (7) when a non-available signal is provided from the second communication system (13) and/or.
wherein the delivery system (1) allows the second communication system (13) to provide a redirect signal indicating at least one alternative address (4B) for delivery to the first communication system (7) wherein preferably:
- the delivery vehicle (5) comprises a tracking device for determining the position of the delivery vehicle (5) relative to the intended address for delivery, wherein an approach signal is provided to the addressee (4A) and/or the second communication system (13) when the vehicle (5) enters into a predetermined range relative to the intended delivery address (4); and/or
- the computer system (10) is designed for calculating a delivery route for the delivery vehicle (5) and for recalculating a route based on inter alia an alternative delivery address (4B) provided for a delivery during the delivery.

4. Delivery system (1) according to any one of the previous claims, wherein the second communication system (13) comprises at least one of:
- a hand held communication device (14), such as a smart phone of tablet; and
a stationary communication device (15); and/or wherein the system (1) comprises a stationary device (15), wherein the stationary device (15) comprises at least a screen (19) for presenting the at least one alternative delivery address (4B), wherein the stationary device (15) preferably comprises or is connected to a doorbell system (16), and/or wherein the second communication system (13) comprises a hand held communication device (14) and the first communication system (7) and/or the proximity detection system comprises a signal unit providing a signal to the hand held device (14), and wherein the delivery system (1) is designed such that:
- at least one alternative delivery address (4B) and/or other information can be sent from the hand held communication device (14) to the first communication system (7) and/or a stationary device (15) provided at the delivery address (4), to be presented to a delivery person (6) on a screen thereof and/or
- at least one alternative delivery address (4B) is presented on the screen and/or the first communication system (7), which at least one alternative delivery address (4B) is derived from the database (2) or has been entered in the second communication device (13).

5. Delivery system (1) according to any one of the previous claims, wherein a delivery code is associated with a delivery to be made, which delivery code is associated with at least a communication means for communication between the first and second communication system (7, 13), such that upon activation of said delivery code, preferably by the delivery person (6), a communication is established between the first and second communication system (7, 13), wherein preferably said delivery code is associated with a mobile phone number and/or computer address of and/or provided by the addressee (4A), especially a mobile phone number or computer address associated with the second communication system (13).

6. Method for delivery of at least one item (3) to at least one delivery address (4) of an addressee (4A) of the item (3),
- wherein an intended delivery address (4) for said item (3) is entered into a first communication system (7) available to a delivery person (6); and
- wherein during delivery of the item (3) proximity of a first communication system (7) of a delivery person (6) and/or delivery vehicle (5) associated to said delivery person (6) to the intended delivery address (4) is detected; **characterized in that**
said proximity is detected wireless by means of at least one beacon (21) at the delivery address (4), communicating wireless with the first communication system (7) when part of the first communication system is brought within a wireless communication range of said at least one beacon (21);
- wherein when said proximity is within a predetermined range a proximity signal can be provided to the first communication means and/or to a second communication means (13) held by the addressee (4A) or a person associated to the addressee (4A), such that a communication can be established between the first and second communication means,
wherein the beacon (21) transmits a recognition code unique to the individual beacon (21);
wherein the first communication device is provided with software for registering and comparing recognition codes received from beacons (21) with recognition codes assigned to delivery addresses provided to the first communication system (7),
wherein the proximity detection system presents a visual and/or auditive signal on the first communication system (7) when the proximity detection system detects proximity of the first communication system (7) to the beacon (21),
wherein the visual and/or auditive signal comprises a link (21A) presented on the first communication system (7) based on the comparison, such that the first communication system (7) only presents such link (21A) for those delivery addresses and/or addresses for whom the comparison shows that the delivery person (6) or delivery vehicle (5) is carrying an item (3) to be delivered, wherein the link (21A) represents a virtual doorbell link presented on a screen of the first communication system (7) for contacting a person registered in the first communication device and/or the computer system as associated with the address of which a match is found by said comparison, an alternative delivery address or a communication link for establishing communication between the first communication system (7) and the addressee (4A), especially the second communication system (13) of the addressee (4A),
wherein the said signal preferably comprises a representation of a virtual door bell (17).

7. Method according to claim 6, wherein when proximity within said predetermined range is detected the at least one link (21A) is presented on the first communication system (7), enabling the delivery person (6) to establish a communication with the second communication system (13) by activating said link (21A) and/or wherein at least one alternative delivery address (4B) for the item (3) is provided to the delivery person (6), prior to or during delivery of said item (3), which alternative delivery address (4B) is provided:
- via the second communication system (13) to the first communication system (7) of the delivery person (6) and/or
- via a computer system (10) to the first communication system (7) and/or to the second communication system (13), said alternative delivery address (4B) provided from a database (2) connected to the computer system (10) wherein preferably during delivery an approach signal is communicated to the addressee (4A), especially to the second communication system (13), when the delivery person (6) enters a predetermined range relative to the primary delivery address (4), wherein the approach signal triggers the providing of the alternative delivery address (4B) to the delivery person (6), especially when the addressee (4A) has entered a non-availability signal in a computer system (10) associated with at least the first communication system (7).

8. Method according to claim 6, wherein at or near the delivery address (4) at least one alternative delivery address (4B) is presented to the delivery person (6) by a presentation device forming part of the first and/or second communication system (7, 13), preferably on a screen (8, 19), especially after signaling the delivery person's presence at or near the delivery address (4), for example by ringing a door bell (17) or based on said proximity signal, wherein preferably the at least one alternative delivery address (4B) is presented to the delivery person (6), wherein:
- the addressee (4A) sets a forward signal in the computer system (10) prior to the delivery, which forward signal initiates the presentation of the at least one predetermined alternative delivery address (4B); and/or
- upon receiving the proximity signal or after initiating communication between the first and second communication systems (7, 13), where after the at least one alternative delivery address (4B) is presented to the delivery person (6), via said screen (8, 19) and/or wherein the at least one alternative delivery address (4B) is presented to the delivery person (6) at or near the intended delivery address (4), wherein the addressee (4A) or the computer system (10) sets the at least one predetermined alternative delivery address (4B) prior to the delivery, wherein more preferably a series of alternative delivery addresses (4B) is set, wherein the delivery person (6) picks one of these alternative delivery addresses (4B) for delivery of the item (3) and/or a delivery route of the delivery person (6) is amended during following said route, based on the change of the primary delivery address (4) to an alternative delivery address (4B).

9. Method for delivery of items (3) to a series of delivery addresses (4B) of addressees (4A) of the items (3), according to any one of claims 6 - 8,
- wherein intended delivery addresses (4) for said items (3) are entered into a first communication system (7) available to a delivery person (6); and
- a delivery route is defined by the system (1) based on said delivery addresses (4),
wherein during execution of the delivery route data is entered into the system (1) concerning at least one of the series of addresses (4), such data including a non-availability signal from one of the addressees (4A) and/or at least one alternative delivery address (4B) for at least one of the series of addresses (4), wherein based on said further data the delivery route or at least a remainder of said delivery route at the time of receipt of that data is recalculated in order to include at least one such alternative delivery address (4B) or the entered delivery addresses (4) are rearranged in a different order, wherein preferably:
the delivery route is defined on the basis of at least one of:
- location of the intended delivery addresses (4);
- indicated availability or non-availability of the addressees (4A);
- traffic information;
- data stored in the system (1) about earlier delivery routes, alternative delivery addresses (4B) provided and other information and/or
during execution of the delivery route the delivery route is changed based on at least one of:
- a non-availability signal entered into the system (1):
- by the addressee (4A) through the second communication system (13); or
- generated by the system (1) due to for example a change in an agenda of an addressee (4A); or
- due to a change in a calculated ETA;
- an alternative delivery address (4B) entered into the system (1) by the addressee (4A) directly; and/or
- traffic information entered into the system (1).

10. Method according to any one of the previous claims 6 - 9,
wherein during delivery of the item (3) an approach signal is communication to the addressee (4A), especially to the second communication system (13), when the delivery person (6) enters a predetermined range relative to the primary delivery address (4), wherein the approach signal triggers the providing of the alternative delivery address (4B) to the delivery person (6), especially when the addressee (4A) has entered a non-availability signal in a computer system (10) associated with at least the first communication means.

11. Method according to any one of claims 6 - 10, wherein at or near the delivery address (4) at least one alternative delivery address (4B) is presented to the delivery person (6) by a presentation device forming part of the first and/or second communication system (7, 13), preferably on a screen (8, 19), especially after signaling the delivery person's presence at or near the delivery address (4), wherein the at least one alternative delivery address (4B) is presented to the delivery person (6), wherein:
- the addressee (4A) sets a forward signal in the computer system (10) prior to the delivery, which forward signal initiates the presentation of the at least one predetermined alternative delivery address (4B); and/or
- upon receiving the proximity signal or after initiating communication between the first and second communication means, where after the at least one alternative delivery address (4B) is presented to the delivery person (6), via said screen (8, 19).

12. Method according to any one of claims 6 - 11, wherein:
- the at least one alternative delivery address (4B) is presented to the delivery person (6) at or near the intended delivery address (4), wherein the addressee (4A) or the computer system (10) sets the at least one predetermined alternative delivery address (4B) prior to the delivery, and/or
- a series of alternative delivery addresses (4B) is set, wherein the delivery person (6) picks one of these alternative delivery addresses (4B) for delivery of the item (3), wherein preferably a delivery route of the delivery person (6) is amended during following said route, based on the change of the primary delivery address (4) to an alternative delivery address (4B).

## Patentansprüche

1. Zustellsystem (1), umfassend eine Datenbank (2) mit Daten, die sich auf wenigstens eine auszuführende Zustellung und wenigstens eine beabsichtigte Zustelladresse (4) für einen Adressaten (4A) für diese Zustellung und wenigstens ein Zustellfahrzeug (5) beziehen,
wobei das Zustellfahrzeug (5) und/oder eine für das Fahrzeug (5) bestimmte Zustellperson (6) mit einem ersten Kommunikationssystem (7) ausgestattet ist und der wenigstens eine Adressat (4A) mit einem zweiten Kommunikationssystem (13) ausgestattet ist, wobei das Zustellsystem (1) ferner ein Computersystem (10) zum Bereitstellen von Daten aus der Datenbank (2) an das erste Kommunikationssystem (7) umfasst, das von Daten über die wenigstens eine Zustellung und die Zustelladresse (4) gebildet wird oder solche enthält, wobei das Zustellsystem (1) ferner ein Näherungsdetektionssystem umfasst, **dadurch gekennzeichnet, dass** das Näherungsdetektionssystem wenigstens eine Bake (21) an der Zustelladresse (4) umfasst, um drahtlos mit dem ersten Kommunikationssystem (7) zu kommunizieren, wenn sich ein Teil des ersten Kommunikationssystems innerhalb eines drahtlosen Kommunikationsbereichs der wenigstens einen Bake (21) befindet, die zum Detektieren der Nähe des ersten Kommunikationssystems (7) zu der Zustelladresse (4) ausgelegt ist;
wobei die Bake (21) zum Übertragen eines Erkennungscodes ausgelegt ist, der für die einzelne Bake (21) einzigartig ist;
wobei die erste Kommunikationsvorrichtung mit Software zum Registrieren und Vergleichen von Erkennungscodes, die von der Bake (21) empfangen werden, ausgestattet ist, wobei Erkennungscodes den Zustelladressen zugewiesen sind, die dem ersten Kommunikationssystem (7) bereitgestellt werden,
wobei das Näherungsdetektionssystem mit einem Modul ausgestattet ist, das ein visuelles und/oder akustisches Signal auf dem ersten
Kommunikationssystem (7) präsentiert, wenn das Näherungsdetektionssystem die Nähe des ersten Kommunikationssystems (7) zu der Bake (21) detektiert,
wobei das visuelle und/oder akustische Signal eine auf dem ersten Kommunikationssystem (7) basierend auf dem Vergleich präsentierte Verbindung (21A) umfasst, so dass das erste Kommunikationssystem (7) nur eine solche Verbindung (21A) für diese Zustelladressen und/oder Adressaten präsentiert, bei denen der Vergleich zeigt, dass die Zustellperson (6) oder das Zustellfahrzeug (5) einen zuzustellenden Gegenstand (3) befördert,
wobei die Verbindung (21A) eine virtuelle Türklingel-Verbindung repräsentiert, die auf einem Bildschirm des ersten Kommunikationssystems (7) präsentiert wird, um eine Person zu kontaktieren, die in dem ersten Kommunikationssystem (7) und/oder dem Computersystem (10) als der Adresse zugeordnet registriert ist, von der durch den Vergleich eine Übereinstimmung gefunden wurde, eine alternative Zustelladresse oder eine Kommunikationsverbindung zum Aufbau einer Kommunikation zwischen dem ersten Kommunikationssystem (7) und dem Adressaten (4A), insbesondere dem zweiten Kommunikationssystem (13) des Adressaten (4A),
wobei:
- das zweite Kommunikationssystem (13) zur Kommunikation mit dem ersten Kommunikationssystem (7) zum Bereitstellen einer alternativen Zustelladresse (4B) für die Zustellung, insbesondere während der Zustellung des Gegenstands (3) ausgelegt ist und/oder
- das Computersystem (10) zum Bereitstellen bei der Zustellung wenigstens einer alternativen Zustelladresse (4B) ausgelegt ist, wobei die alternative Zustelladresse (4B) aus der Datenbank (2) bereitgestellt wird.

2. Zustellsystem (1) nach Anspruch 1, wobei das Näherungsdetektionssystem ferner wenigstens umfasst:
- ein im oder für das erste Kommunikationssystem (7) vorgesehenes GPS-Modul zum Detektieren der globalen Position des Zustellfahrzeugs (5) und/oder der Zustellperson (6) relativ zur Zustelladresse (4); und
- ein visuelles Detektionssystem, das zum Abbilden der Umgebung eines Zustellfahrzeugs (5) und/oder einer Zustellperson (6) und zum Vergleichen des aufgenommenen Bildes mit einem für die Zustelladresse (4) repräsentativen Bild ausgelegt ist.

3. Zustellsystem (1) nach einem der vorhergehenden Ansprüche, wobei das Computersystem (10) programmiert ist, um die wenigstens eine alternative Zustelladresse (4B) an das erste Kommunikationssystem (7) bereitzustellen, wenn ein nicht verfügbares Signal von dem zweiten Kommunikationssystem (13) bereitgestellt wird und/oder,
wobei das Zustellsystem (1) dem zweiten Kommunikationssystem (13) ermöglicht, ein Umleitungssignal bereitzustellen, das wenigstens eine alternative Adresse (4B) zur Zustellung an das erste Kommunikationssystem (7) angibt, wobei vorzugsweise:
- das Zustellfahrzeug (5) eine Ortungsvorrichtung zum Bestimmen der Position des Zustellfahrzeugs (5) relativ zu der beabsichtigten Zustelladresse umfasst, wobei dem Adressaten (4A) und/oder dem zweiten Kommunikationssystem ein Annäherungssignal bereitgestellt wird (13) wenn das Fahrzeug (5) einen vorbestimmten Bereich relativ zur beabsichtigten Zustelladresse (4) betritt; und/oder
- das Computersystem (10) zum Berechnen einer Zustellroute für das Zustellfahrzeug (5) und zum Neuberechnen einer Route basierend auf unter anderem einer für eine Zustellung während der Zustellung bereitgestellten alternativen Zustelladresse (4B) ausgelegt ist.

4. Zustellsystem (1) nach einem der vorhergehenden Ansprüche, wobei das zweite Kommunikationssystem (13) wenigstens umfasst:
- eine tragbare Kommunikationsvorrichtung (14), wie ein Smartphone oder Tablet; und/oder
eine stationäre Kommunikationsvorrichtung (15); und/oder wobei das System (1) eine stationäre Vorrichtung (15) umfasst, wobei die stationäre Vorrichtung (15) wenigstens einen Bildschirm (19) zum Präsentieren der wenigstens einen alternativen Zustelladresse (4B) umfasst, wobei die stationäre Vorrichtung (15) vorzugsweise ein Türklingelsystem (16) umfasst oder damit verbunden ist, und/oder wobei das zweite Kommunikationssystem (13) eine tragbare Kommunikationsvorrichtung (14) und das erste Kommunikationssystem (7) umfasst, und/oder das Näherungsdetektionssystem eine Signaleinheit umfasst, die der tragbaren Vorrichtung (14) ein Signal bereitstellt, und wobei das Zustellsystem (1) so ausgelegt ist, dass:
- wenigstens eine alternative Zustelladresse (4B) und/oder andere Informationen von der tragbaren Kommunikationsvorrichtung (14) an das erste Kommunikationssystem (7) und/oder eine an der Zustelladresse (4) bereitgestellte stationäre Vorrichtung (15) gesendet werden können, um einer Zustellperson (6) auf ihrem Bildschirm präsentiert zu werden und/oder
- wenigstens eine alternative Zustelladresse (4B) auf dem Bildschirm und/oder dem ersten Kommunikationssystem (7) präsentiert wird, wobei die wenigstens alternative Zustelladresse (4B) aus der Datenbank (2) abgeleitet wird oder in die zweite Kommunikationsvorrichtung (13) eingegeben wurde.

5. Zustellsystem (1) nach einem der vorhergehenden Ansprüche, wobei einer auszuführenden Zustellung ein Zustellcode zugeordnet ist, wobei der Zustellcode wenigstens einem Kommunikationsmittel zur Kommunikation zwischen dem ersten und dem zweiten Kommunikationssystem (7, 13) zugeordnet ist, so dass bei Aktivierung des Zustellcodes, vorzugsweise durch die Zustellperson (6), eine Kommunikation zwischen dem ersten und zweiten Kommunikationssystem (7, 13) aufgebaut wird, wobei der Zustellcode vorzugsweise einer Mobiltelefonnummer und/oder Computeradresse des dem Adressaten (4A) und/oder einer von ihm bereitgestellten Mobiltelefonnummer und/oder Computeradresse, insbesondere einer dem zweiten Kommunikationssystem (13) zugeordnete Mobiltelefonnummer oder Computeradresse zugeordnet ist.

6. Verfahren zur Zustellung wenigstens eines Gegenstands (3) an wenigstens eine Zustelladresse (4) eines Adressaten (4A) des Gegenstands (3),
- wobei eine beabsichtigte Zustelladresse (4) für den Gegenstand (3) in ein erstes Kommunikationssystem (7) eingegeben wird, das einer Zustellperson (6) zur Verfügung steht; und
- wobei während der Zustellung des Gegenstands (3) die Nähe eines ersten Kommunikationssystems (7) einer Zustellperson (6) und/oder des der Zustellperson (6) zugeordneten Zustellfahrzeugs (5) zu der beabsichtigten Zustelladresse (4) detektiert wird; **dadurch gekennzeichnet, dass** die Nähe drahtlos mittels wenigstens einer Bake (21) an der Zustelladresse (4) detektiert wird, die mit dem ersten Kommunikationssystem (7) drahtlos kommuniziert, wenn ein Teil des ersten Kommunikationssystems innerhalb eines drahtlosen Kommunikationsbereichs der wenigstens einen Bake (21) gebracht wird;
- wobei, wenn die Nähe innerhalb eines vorbestimmten Bereichs liegt, ein Näherungssignal an das erste Kommunikationsmittel und/oder an ein zweites Kommunikationsmittel (13) bereitgestellt werden kann, das von dem Adressaten (4A) oder einer dem Adressaten (4A) zugeordneten Person gehalten wird, so dass eine Kommunikation zwischen dem ersten und dem zweiten Kommunikationsmittel aufgebaut werden kann,
wobei die Bake (21) einen Erkennungscode überträgt, der für die einzelne Bake (21) einzigartig ist;
wobei die erste Kommunikationsvorrichtung mit Software zum Registrieren und Vergleichen von Erkennungscodes, die von der Bake (21) empfangen werden, ausgestattet ist, wobei Erkennungscodes den Zustelladressen zugewiesen sind, die dem ersten Kommunikationssystem (7) bereitgestellt werden,
wobei das Näherungsdetektionssystem ein visuelles und/oder akustisches Signal auf dem ersten Kommunikationssystem (7) präsentiert, wenn das Näherungsdetektionssystem die Nähe des ersten Kommunikationssystems (7) zu der Bake (21) detektiert,
wobei das visuelle und/oder akustische Signal eine auf dem ersten Kommunikationssystem (7) basierend auf dem Vergleich präsentierte Verbindung (21A), so dass das erste Kommunikationssystem (7) nur eine solche Verbindung (21A) für die Zustelladressen und/oder Adressen präsentiert, bei denen der Vergleich zeigt, dass die Zustellperson (6) oder das Zustellfahrzeug (5) einen zuzustellenden Gegenstand (3) befördert, wobei die Verbindung (21A) eine virtuelle Türklingel-Verbindung darstellt, die auf einem Bildschirm des ersten Kommunikationssystems (7) zum Kontaktieren einer in der ersten Kommunikationsvorrichtung und/oder dem Computersystem als der Adresse zugeordnet registrierten Person präsentiert wird, von der eine Übereinstimmung durch Vergleich gefunden wird, eine alternative Zustelladresse oder eine Kommunikationsverbindung zum Aufbau einer Kommunikation zwischen dem ersten Kommunikationssystem (7) und dem Adressaten (4A), insbesondere dem zweiten Kommunikationssystem (13) dem Adressaten (4A) umfasst,
wobei das Signal vorzugsweise eine Darstellung einer virtuellen Türklingel (17) umfasst.

7. Verfahren nach Anspruch 6, wobei, wenn eine Nähe innerhalb des vorbestimmten Bereichs detektiert wird, die wenigstens eine Verbindung (21A) auf dem ersten Kommunikationssystem (7) präsentiert wird, wodurch es der Zustellperson (6) ermöglicht wird, eine Kommunikation mit dem zweiten Kommunikationssystem (13) durch Aktivieren der Verbindung (21A) aufzubauen und/oder wobei der Zustellperson (6) vor oder während der Zustellung des Gegenstands (3) wenigstens eine alternative Zustelladresse (4B) für den Gegenstand (3) bereitgestellt wird, wobei die alternative Zustelladresse (4B) bereitgestellt wird:
- über das zweite Kommunikationssystem (13) zum ersten Kommunikationssystem (7) der Zustellperson (6) und/oder
- über ein Computersystem (10) an das erste Kommunikationssystem (7) und/oder an das zweite Kommunikationssystem (13), wobei die alternative Zustelladresse (4B) von einer mit dem Computersystem (10) verbundenen Datenbank (2) bereitgestellt wird, wobei vorzugsweise während der Zustellung ein Annäherungssignal an den Adressaten (4A), insbesondere an das zweite Kommunikationssystem (13) kommuniziert wird, wenn die Zustellperson (6) einen vorbestimmten Bereich relativ zur primären Zustelladresse (4) betritt, wobei das Annäherungssignal die Bereitstellung der alternativen Zustelladresse (4B) an die Zustellperson (6) auslöst, insbesondere wenn der Adressat (4A) ein Nichtverfügbarkeitssignal in ein wenigstens dem ersten Kommunikationssystem (7) zugeordnetes Computersystem (10) eingegeben hat.

8. Verfahren nach Anspruch 6, wobei an oder in der Nähe der Zustelladresse (4) wenigstens eine alternative Zustelladresse (4B) der Zustellperson (6) durch eine Präsentationsvorrichtung, die Teil des ersten und/oder zweiten Kommunikationssystems (7, 13) ist, vorzugsweise auf einem Bildschirm (8, 19), präsentiert wird, insbesondere nachdem die Anwesenheit der Zustellperson an oder in der Nähe der Zustelladresse (4) signalisiert wurde, zum Beispiel durch Läuten einer Türklingel (17) oder basierend auf dem Näherungssignal, wobei vorzugsweise die wenigstens eine alternative Zustelladresse (4B) der Zustellperson (6) präsentiert wird, wobei:
- der Adressat (4A) im Computersystem (10) vor der Zustellung ein Weiterleitungssignal festlegt, wobei das Weiterleitungssignal die Präsentation der wenigstens einen vorbestimmten alternativen Zustelladresse (4B) initiiert; und/oder
- bei Empfang des Näherungssignals oder nach Initiierung einer Kommunikation zwischen dem ersten und dem zweiten Kommunikationssystem (7, 13), wonach die wenigstens eine alternative Zustelladresse (4B) der Zustellperson (6) über den Bildschirm (8, 19) präsentiert wird, und/oder wobei die wenigstens eine alternative Zustelladresse (4B) der Zustellperson (6) an oder in der Nähe der beabsichtigten Zustelladresse (4) präsentiert wird, wobei der Adressat (4A) oder das Computersystem (10) die wenigstens eine vorbestimmte alternative Zustelladresse (4B) vor der Zustellung festlegt, wobei bevorzugter eine Reihe von alternativen Zustelladressen (4B) festgelegt wird, wobei die Zustellperson (6) eine dieser alternativen Zustelladressen (4B) für die Zustellung des Gegenstands (3) auswählt und/oder eine Zustellroute der Zustellperson (6) während des Abfahrens dieser Route basierend auf der Änderung der primären Zustelladresse (4) in eine alternative Zustelladresse (4B) geändert wird.

9. Verfahren zur Zustellung von Gegenständen (3) an eine Reihe von Zustelladressen (4B) von Adressaten (4A) der Gegenstände (3) nach einem der Ansprüche 6 bis 8,
- wobei beabsichtigte Zustelladressen (4) für die Gegenstände (3) in ein erstes Kommunikationssystem (7) eingegeben werden, das einer Zustellperson (6) zur Verfügung steht; und
- eine Zustellroute basierend auf den Zustelladressen (4) durch das System (1) definiert wird,
wobei während der Ausführung der Zustellungsroute Daten bezüglich wenigstens einer der Reihe der Adressen (4) in das System (1) eingegeben werden, wobei diese Daten ein Nichtverfügbarkeitssignal von einem der Adressaten (4A) einschließen und/oder wenigstens eine alternative Zustelladresse (4B) für wenigstens eine der Reihe von Adressen (4), wobei basierend auf den weiteren Daten die Zustellroute oder wenigstens ein Rest der Zustellroute zum Zeitpunkt des Empfangs dieser Daten neu berechnet wird, um wenigstens eine solche alternative Zustelladresse (4B) einzuschließen oder die eingegebenen Zustelladressen (4) werden in einer anderen Reihenfolge neu angeordnet, wobei vorzugsweise:
die Zustellroute definiert wird auf der Grundlage von wenigstens:
- dem Ort der beabsichtigten Zustelladressen (4);
- und/oder der angegebenen Verfügbarkeit oder Nichtverfügbarkeit der Adressaten (4A);
- und/oder den Verkehrsinformationen;
- und/oder den im System (1) gespeicherten Daten über frühere Zustellroute, bereitgestellte alternative Zustelladressen (4B) und andere Informationen und/oder während der Ausführung der Zustellroute wird die Zustellroute geändert basierend auf wenigstens:
- einem in das System eingegebenen Nichtverfügbarkeitssignal (1):
- durch den Adressaten (4A) über das zweite Kommunikationssystem (13); oder
- durch das System (1) aufgrund zum Beispiel einer Änderung einer Tagesordnung eines Adressaten (4A) erzeugt; oder
- aufgrund einer Änderung einer berechneten ETA;
- einer alternativen Zustelladresse (4B), die vom Adressaten (4A) direkt in das System (1) eingegeben wird; und/oder
- Verkehrsinformationen, die in das System (1) eingegeben werden.

10. Verfahren nach einem der vorhergehenden Ansprüche 6 bis 9,
wobei bei der Zustellung des Gegenstands (3) ein Näherungssignal an den Adressaten (4A) kommuniziert wird, insbesondere an das zweite Kommunikationssystem (13), wenn die Zustellperson (6) einen vorgegebenen Bereich relativ zur primären Zustelladresse (4) betritt, wobei das Näherungssignal die Bereitstellung der alternativen Zustelladresse (4B) an die Zustellperson (6) auslöst, insbesondere wenn der Adressat (4A) ein Nichtverfügbarkeitssignal in ein Computersystem (10) eingegeben hat, das wenigstens dem ersten Kommunikationsmittel zugeordnet ist.

11. Verfahren nach einem der Ansprüche 6 bis 10, wobei an oder in der Nähe der Zustelladresse (4) der Zustellperson (6) wenigstens eine alternative Zustelladresse (4B) von einer Präsentationsvorrichtung präsentiert wird, die Teil des ersten und/oder zweiten Kommunikationssystems (7, 13) ist, vorzugsweise auf einem Bildschirm (8, 19), insbesondere nach Signalisierung der Anwesenheit der Zustellperson an oder in der Nähe der Zustelladresse (4), wobei die wenigstens eine alternative Zustelladresse (4B) der Zustellperson (6) präsentiert wird, wobei:
- der Adressat (4A) im Computersystem (10) vor der Zustellung ein Weiterleitungssignal festlegt, wobei das Weiterleitungssignal die Präsentation der wenigstens einen vorbestimmten alternativen Zustelladresse (4B) initiiert; und/oder
- beim Empfang des Näherungssignals oder nach der Initiierung einer Kommunikation zwischen dem ersten und dem zweiten Kommunikationsmittel, wonach die wenigstens eine alternative Zustelladresse (4B) der Zustellperson (6) über den Bildschirm (8, 19) präsentiert wird.

12. Verfahren nach einem der Ansprüche 6 bis 11, wobei:
- die wenigstens eine alternative Zustelladresse (4B) der Zustellperson (6) an oder in der Nähe der beabsichtigten Zustelladresse (4) präsentiert wird, wobei der Adressat (4A) oder das Computersystem (10) die wenigstens eine vorbestimmte abweichende Zustelladresse (4B) vor der Zustellung festlegt und/oder
- eine Reihe alternativer Zustelladressen (4B) festgelegt wird, wobei die Zustellperson (6) eine dieser alternativen Zustelladressen (4B) zur Zustellung des Gegenstands (3) auswählt, wobei eine Zustellroute der Zustellperson (6) vorzugsweise während des Abfahrens der Route basierend auf der Änderung der primären Zustelladresse (4) in eine alternative Zustelladresse (4B) geändert wird.

## Revendications

1. Système de livraison (1), comprenant une base de données (2) comprenant des données relatives à au moins une livraison à effectuer et au moins une adresse de livraison (4) prévue pour un destinataire (4A) pour ladite livraison, et au moins un véhicule de livraison (5),
dans lequel le véhicule de livraison (5) et/ou un livreur (6) affecté audit véhicule (5) est pourvu d'un premier système de communication (7) et le au moins un destinataire (4A) est pourvu d'un deuxième système de communication (13), le système de livraison (1) comprenant en outre un système informatique (10) pour fournir des données provenant de la base de données (2) au premier système de communication (7) formées par ou incluant des données concernant la au moins une livraison et ladite adresse de livraison (4), dans lequel le système de livraison (1) comprend en outre un système de détection de proximité, **caractérisé en ce que** ledit système de détection de proximité comprend au moins une balise (21) au niveau de l'adresse de livraison (4), pour communiquer sans fil avec le premier système de communication (7) lorsqu'une partie du premier système de communication se trouve à portée de communication sans fil de ladite au moins une balise (21), conçue pour détecter la proximité du premier système de communication (7) par rapport à l'adresse de livraison (4) ;
dans lequel la balise (21) est conçue pour transmettre un code de reconnaissance propre à la balise (21) individuelle ;
dans lequel le premier dispositif de communication est pourvu d'un logiciel pour enregistrer et comparer les codes de reconnaissance reçus des balises (21) avec les codes de reconnaissance attribués aux adresses de livraison fournies au premier système de communication (7),
dans lequel le système de détection de proximité est pourvu d'un module présentant un signal visuel et/ou auditif sur le premier système de communication (7) lorsque le système de détection de proximité détecte une proximité du premier système de communication (7) par rapport à la balise (21),
dans lequel le signal visuel et/ou auditif comprend une liaison (21A) présentée sur le premier système de communication (7) sur la base de la comparaison, de telle sorte que le premier système de communication (7) présente uniquement une telle liaison (21A) pour les adresses de livraison et/ou destinataires pour lesquels la comparaison montre que le livreur (6) ou véhicule de livraison (5) transporte un article (3) à livrer,
dans lequel la liaison (21A) représente une liaison de sonnette virtuelle présentée sur un écran du premier système de communication (7) pour contacter une personne enregistrée dans le premier système de communication (7) et/ou le système informatique (10) comme associée à l'adresse dont une correspondance est trouvée par ladite comparaison, une adresse de livraison de substitution ou une liaison de communication pour établir une communication entre le premier système de communication (7) et le destinataire (4A), en particulier le deuxième système de communication (13) du destinataire (4A),
dans lequel :
- le deuxième système de communication (13) est conçu pour communiquer avec le premier système de communication (7) pour fournir une adresse de livraison de substitution (4B) pour la livraison, en particulier pendant la livraison dudit article (3) et/ou
- le système informatique (10) est conçu pour fournir au moins une adresse de livraison de substitution (4B) pendant la livraison, ladite adresse de livraison de substitution (4B) étant fournie à partir de la base de données (2).

2. Système de livraison (1) selon la revendication 1, dans lequel le système de détection de proximité comprend en outre au moins un de :
- un module de type GPS fourni dans ou pour le premier système de communication (7) pour détecter la position mondiale du véhicule de livraison (5) et/ou livreur (6) par rapport à l'adresse de livraison (4) ; et
- un système de détection visuelle conçu pour imager l'environnement d'un véhicule de livraison (5) et/ou livreur (6) et comparer une image prise avec une image représentative de l'adresse de livraison (4).

3. Système de livraison (1) selon l'une quelconque des revendications précédentes,
dans lequel le système informatique (10) est programmé pour fournir la au moins une adresse de livraison de substitution (4B) au premier système de communication (7) lorsqu'un signal non disponible est fourni à partir du deuxième système de communication (13) et/ou
dans lequel le système de livraison (1) permet au deuxième système de communication (13) de fournir un signal de redirection indiquant au moins une adresse de substitution (4B) pour la livraison au premier système de communication (7) dans lequel de préférence :
- le véhicule de livraison (5) comprend un dispositif de suivi pour déterminer la position du véhicule de livraison (5) par rapport à l'adresse prévue pour la livraison, dans lequel un signal d'approche est fourni au destinataire (4A) et/ou au deuxième système de communication (13) lorsque le véhicule (5) pénètre dans une portée prédéterminée par rapport à l'adresse de livraison (4) prévue ; et/ou
- le système informatique (10) est conçu pour calculer un itinéraire de livraison pour le véhicule de livraison (5) et pour recalculer un itinéraire sur la base entre autres d'une adresse de livraison de substitution (4B) fournie pour une livraison pendant la livraison.

4. Système de livraison (1) selon l'une quelconque des revendications précédentes, dans lequel le deuxième système de communication (13) comprend au moins un de :
- un dispositif de communication portatif (14), tel qu'un smartphone ou tablette ; et
- un dispositif de communication fixe (15) ; et/ou dans lequel le système (1) comprend un dispositif fixe (15), dans lequel le dispositif fixe (15) comprend au moins un écran (19) pour présenter la au moins une adresse de livraison de substitution (4B), dans lequel le dispositif fixe (15) comprend de préférence ou est connecté à un système de sonnette (16), et/ou dans lequel le deuxième système de communication (13) comprend un dispositif de communication portatif (14) et le premier système de communication (7) et/ou le système de détection de proximité comprend une unité de signalisation fournissant un signal au dispositif portatif (14), et dans lequel le système de livraison (1) est conçu de telle sorte que :
- au moins une adresse de livraison de substitution (4B) et/ou autre information peut être envoyée à partir du dispositif de communication portatif (14) au premier système de communication (7) et/ou à un dispositif fixe (15) se trouvant au niveau de l'adresse de livraison (4), pour être présentée à un livreur (6) sur un écran de celui-ci et/ou
- au moins une adresse de livraison de substitution (4B) est présentée sur l'écran et/ou le premier système de communication (7), laquelle au moins une adresse de livraison de substitution (4B) est tirée de la base de données (2) ou a été entrée dans le deuxième système de communication (13).

5. Système de livraison (1) selon l'une quelconque des revendications précédentes, dans lequel un code de livraison est associé à une livraison à effectuer, lequel code de livraison est associé à au moins un moyen de communication pour la communication entre le premier et deuxième système de communication (7, 13), de telle sorte que lors de l'activation dudit code de livraison, de préférence par le livreur (6), une communication est établie entre le premier et deuxième système de communication (7, 13), dans lequel de préférence ledit code de livraison est associé à un numéro de téléphone mobile et/ou une adresse informatique de et/ou fournie par le destinataire (4A), en particulier un numéro de téléphone mobile ou une adresse informatique associée au deuxième système de communication (13).

6. Procédé pour la livraison d'au moins un article (3) à au moins une adresse de livraison (4) d'un destinataire (4A) de l'article (3),
- dans lequel une adresse de livraison (4) prévue pour ledit article (3) est entrée dans un premier système de communication (7) à la disposition d'un livreur (6) ; et
- dans lequel pendant la livraison de l'article (3) la proximité d'un premier système de communication (7) d'un livreur (6) et/ou véhicule de livraison (5) associé audit livreur (6) par rapport à l'adresse de livraison (4) prévue est détectée ; **caractérisé en ce que**
ladite proximité est détectée sans fil au moyen d'au moins une balise (21) au niveau de l'adresse de livraison (4), communiquant sans fil avec le premier système de communication (7) lorsqu'une partie du premier système de communication est amenée à portée de communication sans fil de ladite au moins une balise (21) ;
- dans lequel lorsque ladite proximité est à portée prédéterminée un signal de proximité peut être fourni au premier moyen de communication et/ou à un deuxième moyen de communication (13) tenu par le destinataire (4A) ou une personne associée au destinataire (4A), de telle sorte qu'une communication peut être établie entre le premier et deuxième moyen de communication,
dans lequel la balise (21) transmet un code de reconnaissance propre à la balise (21) individuelle ;
dans lequel le premier dispositif de communication est pourvu d'un logiciel pour enregistrer et comparer les codes de reconnaissance reçus des balises (21) avec les codes de reconnaissance attribués aux adresses de livraison fournies au premier système de communication (7),
dans lequel le système de détection de proximité présente un signal visuel et/ou auditif sur le premier système de communication (7) lorsque le système de détection de proximité détecte une proximité du premier système de communication (7) par rapport à la balise (21),
dans lequel le signal visuel et/ou auditif comprend une liaison (21A) présentée sur le premier système de communication (7) sur la base de la comparaison, de telle sorte que le premier système de communication (7) présente uniquement une telle liaison (21A) pour les adresses de livraison et/ou adresses pour lesquelles la comparaison montre que le livreur (6) ou véhicule de livraison (5) transporte un article (3) à livrer,
dans lequel la liaison (21A) représente une liaison de sonnette virtuelle présentée sur un écran du premier système de communication (7) pour contacter une personne enregistrée dans le premier dispositif de communication et/ou le système informatique comme associée à l'adresse dont une correspondance est trouvée par ladite comparaison, une adresse de livraison de substitution ou une liaison de communication pour établir une communication entre le premier système de communication (7) et le destinataire (4A), en particulier le deuxième système de communication (13) du destinataire (4A),
dans lequel ledit signal comprend de préférence une représentation d'une sonnette virtuelle (17).

7. Procédé selon la revendication 6, dans lequel lorsqu'une proximité à ladite portée prédéterminée est détectée la au moins une liaison (21A) est présentée sur le premier système de communication (7), permettant au livreur (6) d'établir une communication avec le deuxième système de communication (13) par activation de ladite liaison (21A) et/ou dans lequel au moins une adresse de livraison de substitution (4B) pour l'article (3) est fournie au livreur (6), avant ou pendant la livraison dudit article (3), laquelle adresse de livraison de substitution (4B) est fournie :
- par le biais du deuxième système de communication (13) au premier système de communication (7) du livreur (6) et/ou
- par le biais d'un système informatique (10) au premier système de communication (7) et/ou au deuxième système de communication (13), ladite adresse de livraison de substitution (4B) étant fournie à partir d'une base de données (2) connectée au système informatique (10) dans lequel de préférence pendant la livraison un signal d'approche est communiqué au destinataire (4A), en particulier au deuxième système de communication (13), lorsque le livreur (6) pénètre dans une portée prédéterminée par rapport à l'adresse de livraison (4) primaire, dans lequel le signal d'approche déclenche la fourniture de l'adresse de livraison de substitution (4B) au livreur (6), en particulier lorsque le destinataire (4A) a entré un signal de non-disponibilité dans un système informatique (10) associé à au moins le premier système de communication (7).

8. Procédé selon la revendication 6, dans lequel au niveau ou près de l'adresse de livraison (4) au moins une adresse de livraison de substitution (4B) est présentée au livreur (6) par un dispositif de présentation faisant partie du premier et/ou deuxième système de communication (7, 13), de préférence sur un écran (8, 19), en particulier après le signalement de la présence du livreur au niveau ou près de l'adresse de livraison (4), par exemple en appuyant sur une sonnette (17) ou sur la base dudit signal de proximité, dans lequel de préférence la au moins une adresse de livraison de substitution (4B) est présentée au livreur (6), dans lequel :
- le destinataire (4A) règle un signal vers l'avant dans le système informatique (10) avant la livraison, lequel signal vers l'avant initie la présentation de la au moins une adresse de livraison de substitution (4B) prédéterminée ; et/ou
- lors de la réception du signal de proximité ou après l'initiation de la communication entre les premier et deuxième systèmes de communication (7, 13), après quoi la au moins une adresse de livraison de substitution (4B) est présentée au livreur (6), par le biais dudit écran (8, 19) et/ou dans lequel la au moins une adresse de livraison de substitution (4B) est présentée au livreur (6) au niveau ou près de l'adresse de livraison (4) prévue, dans lequel le destinataire (4A) ou le système informatique (10) règle la au moins une adresse de livraison de substitution (4B) prédéterminée avant la livraison, dans lequel plus préférentiellement une série d'adresses de livraison de substitution (4B) est réglée, dans lequel le livreur (6) choisit une de ces adresses de livraison de substitution (4B) pour la livraison de l'article (3) et/ou un itinéraire de livraison du livreur (6) est corrigé pendant le suivi dudit itinéraire, sur la base du changement de l'adresse de livraison (4) primaire pour une adresse de livraison de substitution (4B).

9. Procédé pour la livraison d'articles (3) à une série d'adresses de livraison (4B) de destinataires (4A) des articles (3), selon l'une quelconque des revendications 6-8,
- dans lequel les adresses de livraison (4) prévues pour lesdits articles (3) sont entrées dans un premier système de communication (7) à la disposition d'un livreur (6) ; et
- un itinéraire de livraison est défini par le système (1) sur la base desdites adresses de livraison (4),
dans lequel pendant l'exécution de l'itinéraire de livraison des données sont entrées dans le système (1) concernant au moins une des séries des adresses (4), de telles données incluant un signal de non-disponibilité provenant d'un des destinataires (4A) et/ou au moins une adresse de livraison de substitution (4B) pour au moins une des séries d'adresses (4), dans lequel sur la base desdites autres données l'itinéraire de livraison ou au moins un reste dudit itinéraire de livraison au moment de la réception de ces données est recalculé afin d'inclure au moins une telle adresse de livraison de substitution (4B) ou les adresses de livraison (4) entrées sont réarrangées dans un ordre différent, dans lequel de préférence :
l'itinéraire de livraison est défini sur la base d'au moins un de :
- l'emplacement des adresses de livraison (4) prévues ;
- la disponibilité ou non-disponibilité indiquée des destinataires (4A) ;
- les informations de circulation ;
- les données stockées dans le système (1) concernant des itinéraires de livraison antérieurs, des adresses de livraison de substitution (4B) fournies et d'autres informations et/ou pendant l'exécution de l'itinéraire de livraison l'itinéraire de livraison est changé sur la base d'au moins un de :
- un signal de non-disponibilité entré dans le système (1) :
- par le destinataire (4A) par l'intermédiaire du deuxième système de communication (13) ; ou
- généré par le système (1) en raison par exemple d'un changement d'agenda d'un destinataire (4A) ; ou
- en raison d'un changement d'heure d'arrivée prévue calculée ;
- une adresse de livraison de substitution (4B) entrée dans le système (1) par le destinataire (4A) directement ; et/ou
- des informations de circulation entrées dans le système (1).

10. Procédé selon l'une quelconque des revendications 6-9, dans lequel pendant la livraison de l'article (3) un signal d'approche est communiqué au destinataire (4A), en particulier au deuxième système de communication (13), lorsque le livreur (6) pénètre dans une portée prédéterminée par rapport à adresse de livraison (4) primaire, dans lequel le signal d'approche déclenche la fourniture de l'adresse de livraison de substitution (4B) au livreur (6), en particulier lorsque le destinataire (4A) a entré un signal de non-disponibilité dans un système informatique (10) associé à au moins le premier moyen de communication.

11. Procédé selon l'une quelconque des revendications 6-10, dans lequel au niveau ou près de l'adresse de livraison (4) au moins une adresse de livraison de substitution (4B) est présentée au livreur (6) par un dispositif de présentation faisant partie du premier et/ou deuxième système de communication (7, 13), de préférence sur un écran (8, 19), en particulier après le signalement de la présence du livreur au niveau ou près de l'adresse de livraison (4), dans lequel de préférence la au moins une adresse de livraison de substitution (4B) est présentée au livreur (6), dans lequel :
- le destinataire (4A) règle un signal vers l'avant dans le système informatique (10) avant la livraison, lequel signal vers l'avant initie la présentation de la au moins une adresse de livraison de substitution (4B) prédéterminée ; et/ou
- lors de la réception du signal de proximité ou après l'initiation de la communication entre les premier et deuxième moyens de communication, après quoi la au moins une adresse de livraison de substitution (4B) est présentée au livreur (6), par le biais dudit écran (8, 19).

12. Procédé selon l'une quelconque des revendications 6-11, dans lequel :
- la au moins une adresse de livraison de substitution (4B) est présentée au livreur (6) au niveau ou près de l'adresse de livraison (4) prévue, dans lequel le destinataire (4A) ou le système informatique (10) règle la au moins une adresse de livraison de substitution (4B) prédéterminée avant la livraison, et/ou
- une série d'adresses de livraison de substitution (4B) est réglée, dans lequel le livreur (6) choisit une de ces adresses de livraison de substitution (4B) pour la livraison de l'article (3), dans lequel de préférence un itinéraire de livraison du livreur (6) est corrigé pendant le suivi dudit itinéraire, sur la base du changement de l'adresse de livraison (4) primaire pour une adresse de livraison de substitution (4B).
